# EUROPÄISCHE PATENTSCHRIFT

(11) **EP 0 970 439 B1**
(45) Veröffentlichungstag und Bekanntmachung des Hinweises auf die Patenterteilung: **10.04.2002**
(21) Anmeldenummer: 98928092.0
(22) Anmeldetag: 26.03.1998
(51) Int. Cl.: G06T 3/00

(54) **VERFAHREN UND SCHALTUNGSANORDNUNG ZUM ERZEUGEN VON GESTAUCHTEN ODER GEDEHNTEN BILDERN SOWIE DRUCKER MIT EINER DERARTIGEN SCHALTUNGSANORDNUNG**
METHOD AND CIRCUIT FOR THE PRODUCTION OF COMPRESSED OR EXPANDED IMAGES, AND PRINTER WITH SUCH CIRCUIT
PROCEDE ET CIRCUIT DESTINES A LA PRODUCTION D'IMAGES COMPRIMEES OU DILATEES, ET IMPRIMANTE DOTE D'UN TEL CIRCUIT

(30) Priorität: 27.03.1997 DE 19713080
(43) Veröffentlichungstag der Anmeldung: 12.01.2000
(73) Patentinhaber: Océ Printing Systems GmbH, 85586 Poing (DE)
(72) Erfinder: MURMURACHI, Alexander, D-86152 Augsburg (DE)
(74) Vertreter: Schaumburg, Thoenes & Thurn
(86) Internationale Anmeldenummer: DE9800906
(87) Internationale Veröffentlichungsnummer: WO9843206

(56) Entgegenhaltungen:
- DE-A- 3 418 624
- US-A- 4 275 450
- US-A- 4 742 553
- US-A- 4 747 154

## Beschreibung

Die Erfindung betrifft ein Verfahren zum Verarbeiten von Bilddaten, insbesondere in einem Drucker, bei dem ein zu bearbeitendes Quellbild matrixförmig angeordnete Quellbildelemente enthält, denen jeweils ein Quellbilddatum zugeordnet ist, welches die Darstellung des jeweiligen Quellbildelements festlegt. Ein bei der Weiterverarbeitung der Quellbilddaten entstehendes Zielbild enthält matrixförmig angeordnete Zielbildelemente, denen jeweils ein Zielbilddatum zugeordnet ist, welches die Darstellung des jeweiligen Zielbildelementes festlegt.

Derartige Verfahren werden Skalierungsverfahren genannt und z.B. in Druckern eingesetzt, wenn aus den Quellbilddaten eines Quellbildes Zielbilddaten eines Druckbildes bzw. Zielbildes erzeugt werden, das gegenüber dem Quellbild in Zeilenrichtung gestreckt oder gestaucht ist, bzw. in Zeilenrichtung eine höhere oder niedrigere Auflösung als das Quellbild hat. Ein Skalierfaktor gibt dabei das Verhältnis zwischen Zielbild-Auflösung und Quellbild-Auflösung in einer bestimmten Bildrichtung an.

Wird beispielsweise zeilenweise skaliert, so wird ein Zeilenfaktor als Skalierfaktor vorgegeben, der das Verhältnis der Zahl von Zielbildelementen je Zeile des Zielbildes zur Zahl von Quellbildelementen je Zeile des Quellbildes festlegt. Der Zeilenfaktor hat mitunter einen nicht ganzzahligen Wert. Soll aus einem Quellbild mit einer Auflösung von 240 dpi (Bildelemente je 25,4 mm) in Zeilenrichtung ein Zielbild mit einer Auflösung von 600 dpi in Zeilenrichtung erzeugt werden, so hat der Zeilenfaktor z.B. den Wert 2,5. Der Zeilenfaktor hat ebenfalls den Wert von 2,5, wenn bei gleicher Größe der Quellbildelemente und der Zielbildelemente aus dem Quellbild ein Zielbild erzeugt werden soll, dessen Ausdehnung in Zeilenrichtung den 2,5-fachen Wert der Ausdehnung des Quellbildes in Zeilenrichtung hat. Mit anderen Worten wird das Quellbild um den Faktor 2,5 in Zeilenrichtung gedehnt.

Der Zeilenfaktor ist kleiner als 1, wenn aus dem Quellbild ein Zielbild mit verringerter Auflösung in Zeilenrichtung erzeugt wird oder wenn das Zielbild gegenüber dem Quellbild in Zeilenrichtung gestaucht ist.

Für das Erzeugen der Zieldaten ist z.B. ein Verfahren bekannt, das eine Transformation der Ortskoordinaten zwischen Quellbild und Zielbild durchführt. Bei diesem Verfahren werden jedoch eine Vielzahl von Multiplikationen und ähnlicher Operationen durchgeführt, die eine Vielzahl von Prozessortakten benötigen.

Aus der US 4,275,450 sind ein Verfahren und eine Schaltungsanordnung zum Vergrößern oder ' Verkleinern von Bildern bekannt, bei denen die Bilddaten selektiv durch eine Vielzahl von Verarbeitungsstufen geschleust werden.

Aus der DE 34 18 624 C2 ist ein Skalierungsverfahren bekannt, bei dem Bilddaten zeilenweise von einem ersten Raster in ein zweites Raster unterschiedlicher Auflösung umgesetzt werden. Zum Verkleinern von Bildern (Skalierfaktor < 1) wird in einem Adresszähler zunächst ein Anfangswert (z.B. 5/16) eingestellt und der Zähler mit jedem Verarbeitungsschritt um einen bestimmten Wert (z.B. 5/8) erhöht. Jedesmal, wenn der Adresszähler einen Vergleichswert (z.B. 1) übersteigt, wird das aktuelle Bilddatum in einem Zwischenspeicher übertragen. Der Vergleichswert ist dabei größer als der Anfangswert.

Nachteilig bei dieser Art des Skalierens ist, daß die äußersten Bildelemente an den Bildrändern - insbesondere das erste Bildelement am Zeilenbeginn - unterdrückt werden, weil der Anfangswert (5/8) kleiner ist als der Vergleichswert. Dies führt zu Bildverfälschungen; insbesondere werden Randlinien mit einem Pixel Breite, im Zielbild nicht wiedergegeben.

Es ist Aufgabe der Erfindung, beim Skalieren von Bilddaten eine hohe Verarbeitungsgeschwindigkeit und eine originaltreue Wiedergabe im Zielbild zu erreichen.

Diese Aufgabe wird gemäß der Erfindung durch eine Verfahrensweise mit den Merkmalen der Patentansprüche 1, 2, 4 und 20 sowie durch eine Schaltungsanordnung mit den Merkmalen der Patentansprüche 14 oder 15 gelöst. Vorteilhafte Ausführungsformen der Erfindung sind in den Unteransprüchen angegeben.

Gemäß der Erfindung wird eine Skaliervariable zyklisch mit einem Vergleichswert verglichen und in Abhängigkeit vom Vergleichsergebnis entschieden, ob ein Quellbilddatum als Zielbilddatum übernommen wird. Dabei wird von einem Startwert ausgegangen, der so festgelegt ist, daß unter einem vorgegebenen Vergleichskriterium in einer Gruppe von Quellbilddaten wie in einer Bildzeile oder in einer Bildspalte jeweils das erste Quellbilddatum als Zielbilddatum übernommen wird.

Wenn ein Quellbilddatum als Zielbilddatum übernommen wurde, wird die Skaliervariable um einen konstanten Wert, insbesondere um den Wert Eins entweder addiert oder subtrahiert. Wenn ein Quellbilddatum nicht als Zielbilddatum übernommen wurde, wird die Skaliervariable um den Skalierfaktor entweder subtrahiert oder addiert. Die Subtraktion bzw. Additionen in den beiden Fällen der Übernahme verhalten sich bei der Erfindung wechselseitig: wird im Falle der Datenübernahme subtrahiert, so wird im Falle der Nichtübernahme addiert und umgekehrt.

In einer bevorzugten Ausführungsform der Erfindung ist der Startwert identisch mit dem Skalierfaktor, der Vergleichswert diese wird zyklisch von der Skaliervariablen subtrahiert. In einer weiteren bevorzugten Ausführungsform der Erfindung ist der Startwert identisch mit dem Skalierfaktor, der Vergleichswert ist null , als Konstante wird der Wert eins verwendet und diese wird zyklisch zu der Skaliervariablen addiert.

Die Erfindung geht von der Überlegung aus, daß das Erzeugen des Zielbildes dann besonders einfach ist, wenn möglichst nur Additions- und Subtraktionsoperationen beim Durchführen des Verfahrens verwendet werden, bzw. Rechenoperationen, deren Ausführung nur einen Takt oder nur wenige Takte in einer digitalen Schaltungsanordnung benötigt. Insbesondere in einem Drucker werden die Bilddaten hintereinander zu einem Druckkopf übertragen. Somit muß das Verfahren so ausgelegt werden, daß ein zusätzliches Zwischenspeichern der Bilddaten vermieden wird.

Durch die Vergabe eines Skalierfaktors und die nachgeschaltete, zyklische Verarbeitung der Quellbilddaten wird eine hohe Verarbeitungsgeschwindigkeit erreicht. Dadurch, daß als Startwert ein Wert vorgegeben wird, bei dem das erste Bilddatum übernommen wird , beispielsweise das erste Quellbilddatum einer Zeile oder Spalte als erstes Zielbilddatum, werden die am Anfang liegenden Bildpunkte des Bildes in jedem Fall korrekt wiedergegeben und zwar unabhängig vom konkreten Skalierfaktor (Dehnung oder Stauchung). Bei einer Dehnung des Bildes werden mindestens die beiden ersten Bildpunkte einer Zeile bzw. die ersten beiden Zeilen eines Bildes in die Zielbilddaten übernommen. Die Wiedergabetreue in diesen Randbereichen ist deshalb gegenüber dem oben genannten und bekannten Verfahren wesentlich verbessert. Dieser Vorteil wird insbesondere bei grafischen Randlinien von Bildern sichtbar.

Die Erfindung eignet sich insbesondere zur Verwendung in einer fest verdrahteten elektronischen Schaltung oder in einem anwenderspezifischen integrierten Schaltkreis (ASIC). Besonders vorteilhaft ist bei einer derartigen Schaltung eine Pipelinestruktur, in der die Quellbilddaten von einem ersten Speicher über eine erste Datenleitung in eine Steuerschaltung zum Ausführen der Berechnungen und Vergleiche geladen und die berechneten Zielbilddaten in einen nachgeschalteten zweiten Speicher abgelegt werden. Der zweite Speicher ist mit der Steuerschaltung über eine von der ersten Leitung getrennten, zweiten Leitung verbunden. Diese Anordnung erlaubt eine hohe Verarbeitungsgeschwindigkeit, weil das Laden und Abspeichern der Quell-bzw. Zielbilddaten zeitlich parallel erfolgen kann.

Bei einer zeilenweisen zyklischen Bilddatenverarbeitung gemäß der Erfindung werden die Quellbilddaten zu aufeinanderfolgenden Quellbildelementen mindestens einer Zeile des Quellbildes nacheinander verarbeitet. Der Skalierfaktor gibt hier das Verhältnis der Zahl der Zielbildelemente je Zeile des Zielbildes zur Zahl von Quellbildelementen je Zeile des Quellbildes an. Die zeilenweise Bearbeitung ermöglicht das Bearbeiten eines Datenstroms aus aufeinanderfolgenden Quellbilddaten ohne zusätzliche Zwischenspeicherung bzw. mit nur einem kleinen Zwischenspeicher zum Anpassen der Verarbeitungsgeschwindigkeit an die Geschwindigkeit des Auftretens der Quellbilddaten.

Beim zeilenweise arbeitenden Verfahren gemäß der Erfindung wird der Zeilenfaktor als Startwert für eine Zeilenvariable verwendet. Anschließend werden zyklisch die folgenden Schritte ausgeführt:
a) falls der momentane Wert der Zeilenvariablen größer als Null ist, wird das momentan bearbeitete Quellbilddatum kopiert und als Zielbilddatum verwendet, ferner wird der momentane Wert der Zeilenvariablen um den numerischen Wert "1" verringert,
b) falls der momentane Wert der Zeilenvariablen nicht größer Null ist, wird das nächste Quellbilddatum an Stelle des momentanen bearbeiteten Quellbilddatums verwendet, ferner wird zum momentanen Wert der Zeilenvariablen der Wert des Zeilenfaktors addiert.

In den Schritten a und b sind nur Abfrageoperationen, Kopiervorgänge, Subtraktionen und Additionen auszuführen. Diese Operationen benötigen nur wenige Takte in einem Prozessor bzw. in einer getakteten Schaltungsanordnung, die kein Programm abarbeitet. Bei der Subtraktion wird ausschließlich der Wert "1" subtrahiert, so daß auch ein Abwärtszähler verwendet wird. Somit läßt sich das Verfahren nach der Erfindung mit hoher Geschwindigkeit durchführen. Das Verfahren nach der Erfindung ist weiterhin deshalb einfach, weil es im wesentlichen nur zwei unterschiedliche Verfahrensschritte enthält.

Beim Verfahren nach der Erfindung entstehen nacheinander Zielbilddaten zu aufeinanderfolgenden Zielbildelementen einer Zeile des Zielbildes. Die Zielbilddaten können als Zielbilddatenstrom nacheinander an den Druckkopf eines Druckers übertragen oder in einem Zwischenspeicher für weitere Operationen gespeichert werden.

Die Erfindung kann auch als spaltenweise arbeitendes Verfahren zum Verarbeiten von Bilddaten eingesetzt werden, bei dem ein Spaltenfaktor vorgegeben wird, der das Verhältnis der Zahl von Zielbildelementen je Spalte des Zielbildes zur Zahl von Quellbildelementen je Spalte des Quellbildes festlegt. Spaltenweise bedeutet in diesem Zusammenhang, daß die Spalte aus ganzen Zeilen des Quellbildes bzw. des Zielbildes besteht. Beim spaltenweise arbeitenden Verfahren nach der Erfindung werden im wesentlichen ähnliche Schritte wie beim zeilenweise arbeitenden Verfahren nach der Erfindung durchgeführt. Somit gelten die obigen Überlegungen und technischen Wirkungen auch für das spaltenweise arbeitende Verfahren nach der Erfindung. Jedoch werden spaltenweise arbeitende Verfahren nach der Erfindung an Stelle des Zeilenfaktors der Spaltenfaktor und an Stelle der Zeilenvariablen eine Spaltenvariable verwendet.

Beim spaltenweise arbeitenden Verfahren werden die Quellbilddaten zu aufeinanderfolgenden Zeilen des Quellbildes nacheinander verarbeitet. Dabei werden aus den momentan bearbeiteten Quellbilddaten zu einer Zeile des Quellbildes nach einem vorgegebenen Zeilenbearbeitungsverfahren Zielbilddaten zu Zielbildelementen einer Zeile des Zielbildes erzeugt. Bei dem vorgegebenen Zeilenbearbeitungsverfahren werden im einfachsten Fall die Quellbilddaten einer Zeile kopiert und als Zielbilddaten einer Zielbildzeile verwendet. In diesem Fall hat der Zeilenfaktor jedoch den Wert "1".

In einer Weiterbildung des spaltenweise arbeitenden Verfahrens werden die Zielbilddaten nur dann nach dem vorgegebenen Zeilenbearbeitungsverfahren erzeugt, wenn zu den momentan bearbeiteten Quellbilddaten noch keine Zielbilddaten nach dem Zeilenbearbeitungsverfahren erzeugt wurden. Wurden bereits Zielbilddaten erzeugt, so wird eine Kopie dieser Zielbilddaten verwendet. Dies setzt voraus, daß die nach dem Zeilenbearbeitungsverfahren erzeugten Zielbilddaten einer Zeile des Zielbildes gespeichert werden, bis mit dem Zeilenbearbeitungsverfahren zu anderen Quellbilddaten Zielbilddaten einer neuen Zeile erzeugt werden. Das Speichern von Zielbilddaten zu einer Zeile des Zielbildes wird vorzugsweise dann durchgeführt, wenn der Spaltenfaktor einen Wert größer eins hat. Durch das Speichern der Zielbilddaten wird ein mehrmaliges Durchführen des Zeilenbearbeitungsverfahrens zur Bearbeitung derselben Quellbilddaten einer Zeile vermieden. Ein Kopieren der Zielbilddaten ist schneller durchzuführen als eine neue Berechnung. Somit wird auch das gesamte Verfahren schneller.

In einer anderen Weiterbildung des spaltenweise arbeitenden Verfahrens nach der Erfindung stimmt das vorgegebene Zeilenbearbeitungsverfahren zum Verarbeiten von Quellbilddaten einer Zeile im wesentlichen mit dem zeilenweise arbeitenden Verfahren nach der Erfindung überein. D.h., daß zusätzlich zu den in Patentanspruch 1 angegebenen Verfahrensschritten die im Patentanspruch 1 angegebenen Verfahrensschritte ausgeführt werden, um die Zielbilddaten einer Zeile zu erzeugen. Durch diese Maßnahme ergibt sich ein einheitliches Verfahren für die Dehnung und Stauchung bzw. für die Auflösungserhöhung und die Auflösungsverringerung sowohl in Zeilenrichtung als auch in Spaltenrichtung. Bei diesem Verfahren können der Spaltenfaktor und der Zeilenfaktor unabhängig voneinander gewählt werden.

Das Subtrahieren des Wertes 1 und das Addieren des Zeilenfaktors bzw. des Spaltenfaktors zur Zeilenvariablen bzw. Spaltenvariablen wird vorteilhaft so durchgeführt, daß die Operationen getrennt für den Vorkommawert und den Nachkommawert der Zeilenvariablen bzw. der Spaltenvariablen ausgeführt werden. Durch diese Maßnahme können an Stelle eines Addierers mit z.B. 32 Bit zwei Addierer mit einer Bitbreite von 16 Bit verwendet werden. Dies ist insbesondere dann vorteilhaft, wenn in einer integrierten Schaltung, z.B. in einem ASIC (anwenderspezifischer Schaltkreis), die Taktfrequenz für zwei kleinere Addierer niedriger ist als für einen größeren Addierer.

Bei einer getrennten Bearbeitung von Vorkommawert und Nachkommawert läßt sich der Vorkommawert als Zählerwert in einem Zähler bearbeiten, da er immer nur um den numerischen Wert 1 verringert werden muß. Ein Zähler läßt sich mit geringerem schaltungstechnischen Aufwand aufbauen als ein Addierer oder Subtrahierer.

Die Trennung in Vorkommawert und Nachkommawert bei der Bearbeitung der Zeilenvariablen und/oder der Spaltenvariablen erlaubt es, vorteilhaft für den Nachkommawert einen Addierer für ganzzahlige Additionen zu verwenden. Ein solcher Addierer läßt sich schaltungstechnisch einfacher realisieren als ein Addierer für rationale Zahlen, d.h. Zahlen mit Kommastelle.

In einer weiteren, vorteilhaften Ausführungsform der Erfindung werden bei einem Skalierfaktor, der größer als eins ist, aus den Quellbilddaten einer momentan bearbeiteten Gruppe von Quellbilddaten die Zielbilddaten mehrerer Gruppen von Zielbilddaten erzeugt werden, indem aus der Gruppe von Quellbilddaten nur eine Gruppe von Zielbilddaten erzeugt wird, diese gespeichert und anschließend solange kopiert wird, bis die nächste Gruppe von Quellbilddaten bearbeitet wird. Als Gruppe wird insbesondere eine Zeile verwendet. Dabei werden aus den Quellbilddaten der momentan bearbeiteten Zeile nur einmal Zielbilddaten einer Zielbildzeile erzeugt und dann gespeichert. Diese Zielbilddaten werden solange kopiert, bis die Quellbilddaten einer nächsten Quellbildzeile bearbeitet werden. Dadurch läßt sich eine Wiederholung von Berechnungsvorgängen vermeiden und folglich die Verarbeitungsgeschwindigkeit für die Daten eines Gesamtbildes erhöhen.

Die oben genannten technischen Wirkungen und Vorteile des erfindungsgemäßen Verfahrens gelten auch für die entsprechenden Schaltungsanordnungen.

Im folgenden werden Ausführungsbeispiele des Verfahrens nach der Erfindung an Hand der Zeichnungen erläutert. Darin zeigen:
- Figur 1: ein Flußdiagramm eines Verfahrens zum Erzeugen eines Zielbildes mit einer gegenüber einem Quellbild geänderten Auflösung oder Größe,
- Figur 2: ein Flußdiagramm für die Verfahrensschritte zum Erzeugen einer Zielbildzeile mit einer im Vergleich zu einer Quellbildzeile veränderten Auflösung oder Größe,
- Figur 3: ein Quellbild und ein aus diesem Quellbild erzeugtes Zielbild mit einer größeren Ausdehnung in Zeilenrichtung (Dehnung),
- Figur 4: ein weiteres Quellbild und ein aus dem weiteren Quellbild erzeugtes Zielbild mit einer kleineren Ausdehnung in Zeilenrichtung (Stauchung),
- Figuren 5A und 5B: ein vereinfachtes Flußdiagramm zur Beschreibung der Vorgänge in einer Schaltungsanordnung, welche das in Fig. 2 gezeigte Verfahren durchführt,
- Figur 6: das Blockschaltbild der genannten Schaltungsanordnung und
- Figuren 7A und 7B.: zwei Auszüge aus Computerprogrammen.

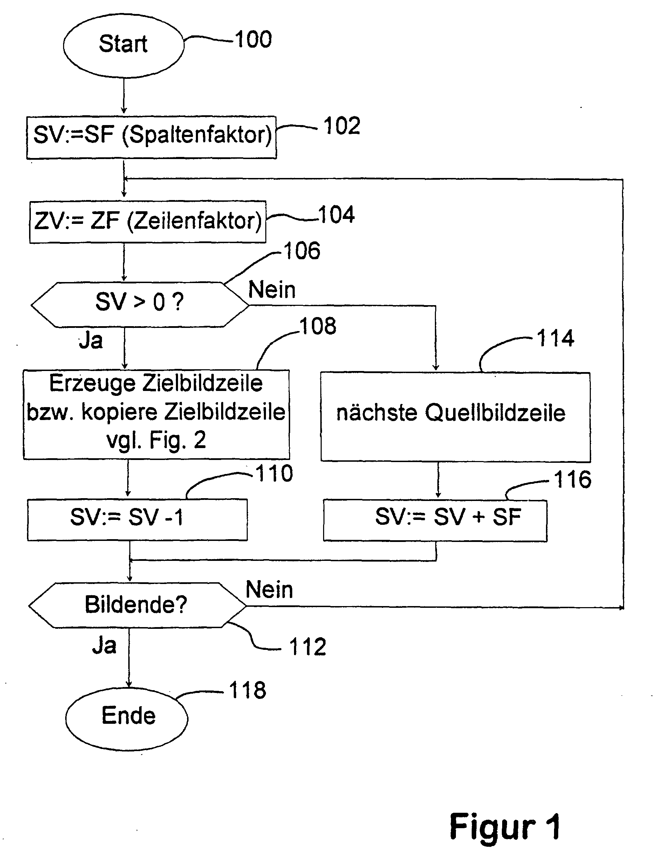

Figur 1 zeigt ein Flußdiagramm eines Verfahrens zum Erzeugen eines Zielbildes mit einer gegenüber einem Quellbild geänderten Auflösung oder Größe. Die Quellbilddaten werden z.B. nacheinander über eine oder mehrere Datenleitungen (nicht dargestellt) empfangen oder sind in einem Speicher (nicht dargestellt) gespeichert. Bei der Übertragung der Quellbilddaten als Datenstrom für aufeinanderfolgende Zeilen über die Datenleitungen werden die Quellbilddaten zeilenweise und innerhalb der Zeilen z.B. von links nach rechts empfangen. Falls die Quellbilddaten im Speicher abgelegt sind, so sind Quellbilddaten zu aufeinanderfolgenden Quellbildelementen einer Zeile in der Regel in Speicherzellen mit aufeinander folgenden Adressen gespeichert, so daß bei einem zeilenweisen Lesen der Quellbilddaten die Adresse jeweils nur um einen festen Wert erhöht werden muß. Im folgenden wird beim Erläutern des Verfahrens davon ausgegangen, daß die Quellbilddaten als Datenstrom empfangen werden. Die folgenden Ausführungen gelten aber sinngemäß auch für den Fall, daß die Quellbilddaten in einem Speicher gespeichert sind.

Das Verfahren beginnt in einem Schritt 100, wenn das erste Quellbilddatum empfangen wird. Beim Start des Verfahrens im Schritt 100 wurden bereits alle Initialisierungsvorgänge ausgeführt. Insbesondere wurde ein Spaltenfaktor SF und ein Zeilenfaktor ZF vorgegeben. Der Spaltenfaktor SF definiert das Verhältnis der Zahl von Zielbildelementen je Spalte des Zielbildes zur Zahl von Quellbildelementen je Spalte des Quellbildes. Der Zeilenfaktor ZF definiert das Verhältnis der Zahl von Zielbildelementen je Zeile des Zielbildes zur Zahl von Quellbildelementen je Zeile des Quellbildes. Der Spaltenfaktor SF und der Zeilenfaktor ZF können unabhängig voneinander gewählt werden, wobei beide Faktoren positiv sind.

Im folgenden Schritt 102 erhält eine Spaltenvariable SV als Startwert den Wert des Spaltenfaktors SF. Im Schritt 104 erhält dann eine Zeilenvariable ZV als Startwert den Wert des Zeilenfaktors ZF.

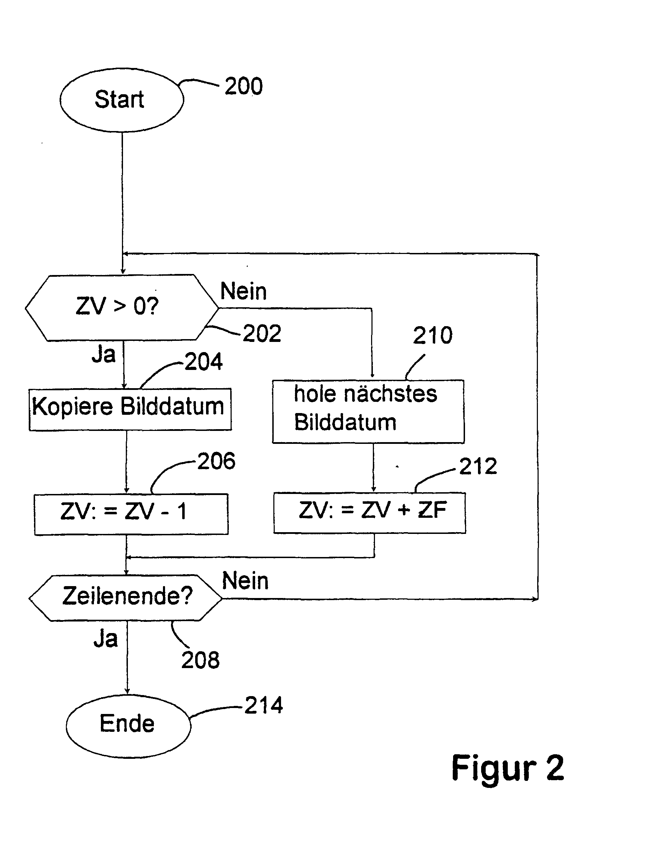

In Schritt 106 wird geprüft, ob der momentane Wert der Spaltenvariable größer Null ist. Ist dies der Fall, so werden aus den Quellbilddaten zu den Quellbildelementen der momentan bearbeiteten Zeile des Quellbildes Zielbilddaten nach einem unten an Hand der Figur 2 erläuterten Verfahren erzeugt. Beim erstmaligen Durchführen des Schritts 108 sind dies die Zielbilddaten der ersten Zeile des Zielbildes. Das Erzeugen der Zielbilddaten ist besonders einfach, wenn der Zeilenfaktor ZF den numerischen Wert "1" hat, d.h. es findet in Zeilenrichtung keine Stauchung oder Dehnung bzw. Auflösungserhöhung oder Auflösungsverringerung statt. In diesem Fall brauchen die Quellbilddaten der momentan bearbeiteten Quellbildzeile nur als Zielbilddaten übernommen zu werden.

Nach dem Schritt 108 folgt der Schritt 110, in dem der Wert der Spaltenvariable SV um den numerischen Wert "1" verringert wird. Anschließend wird das Verfahren in einem Schritt 112 fortgesetzt, der weiter unten erläutert wird.

Wird in Schritt 106 dagegen festgestellt, daß der momentane Wert der Spaltenvariable SV nicht größer Null ist, so folgt unmittelbar nach dem Schritt 106 ein Schritt 114, in welchem mit dem Verarbeiten der Quellbilddaten einer folgenden Zeile des Quellbildes begonnen wird. Das bedeutet, daß beim nächsten Abarbeiten des Schritts 108 die Quellbilddaten der folgenden Zeile verarbeitet werden. Wird der Schritt 108 jedoch vor dem nächsten Ausführen des Schritts 114 nicht ausgeführt, so werden die Quellbilddaten der folgenden Zeile nicht verwendet. Gegebenenfalls werden so die Quellbilddaten mehrerer Zeilen nicht weiterverarbeitet. Dies ist immer dann der Fall, wenn der Spaltenfaktor SF wesentlich kleiner als eins ist und z.B. den Wert 0,3 hat.

Wird der Schritt 114 andererseits z.B. bei einem Spaltenfaktor von 3,3 zwischen dem wiederholten Ausführen des Schritts 108 nicht ausgeführt, so werden aus den Quellbilddaten der momentan bearbeiteten Quellbildzeile die Zielbilddaten mehrerer Zielbildzeilen erzeugt. Um eine Wiederholung von Berechnungsvorgängen zu vermeiden, werden aus den Quellbilddaten der momentan bearbeiteten Zeile nur einmal Zielbilddaten einer Zielbildzeile erzeugt und dann gespeichert. Diese Zielbilddaten werden solange kopiert, bis die Quellbilddaten einer nächsten Quellbildzeile bearbeitet werden. Dies ist jedoch erst der Fall, wenn wieder der Schritt 114 ausgeführt wird.

In einem unmittelbar auf den Schritt 114 folgenden Schritt 116 wird zum momentanen Wert der Spaltenvariable SV der Wert des Spaltenfaktors SF addiert. Anschließend wird das Verfahren in Schritt 112 fortgesetzt.

In Schritt 112 wird geprüft, ob bereits alle Quellbilddaten verarbeitet wurden. Ist dies nicht der Fall, so wird das Verfahren in Schritt 104 fortgesetzt und eine Schleife aus den Verfahrensschritten 104 bis 112 durchlaufen. Dabei werden nacheinander die Zielbilddaten zu aufeinanderfolgenden Zeilen des Zielbildes erzeugt.

Die Schleife aus den Verfahrensschritten 104 bis 112 wird in Schritt 112 nur dann verlassen, wenn festgestellt wird, daß bereits alle Quellbilddaten des Quellbildes verarbeitet und damit auch alle Zielbilddaten des Zielbildes erzeugt wurden.

In diesem Fall wird das Verfahren in einem Schritt 118 beendet. Die Zielbilddaten des Zielbildes wurden während des Verfahrens in der Reihenfolge ihres Erzeugens an einen Druckkopf eines Druckers gesendet. Alternativ können die Zielbilddaten auch in einem Speicher zur weiteren Bearbeitung gespeichert werden.

Figur 2 zeigt ein Flußdiagramm zum Erzeugen der Zielbilddaten einer Zielbildzeile aus Quellbilddaten zu den Quellbildelementen einer Quellbildzeile, die im Vergleich zur Zahl der Zielbildelemente in der Zielbildzeile eine andere Zahl von Quellbildelementen oder die gleiche Zahl von Quellbildelementen hat. Abhängig vom Zeilenfaktor ZF hat die Zielbildzeile mehr Zielbildelemente als die Quellbildzeile falls der Zeilenfaktor ZF größer eins ist und weniger Zielbildelemente falls der Zeilenfaktor ZF kleiner als eins ist.

Das Verfahren, das im Flußdiagramm der Figur 2 dargestellt ist, beginnt in einem Schritt 200. Dieser Schritt folgt unmittelbar nach dem Schritt 106 (vgl. Figur 1) falls im Schritt 106 festgestellt wird, daß die Spaltenvariable SV einen Wert größer Null hat.

Nach dem Schritt 200 wird ein Schritt 202 ausgeführt, in welchem geprüft wird, ob der momentane Wert der Zeilenvariable ZV größer Null ist. Ist dies der Fall, so wird das momentan bearbeitete Quellbilddatum als Zielbilddatum verwendet, vgl. Schritt 204. Das Übernehmen des Quellbilddatums als Zielbilddatum erfolgt z.B. in einem Kopiervorgang.

In einem Schritt 206 wird anschließend der momentane Wert der Zeilenvariablen ZV um den numerischen Wert "1" verringert. Danach wird das Verfahren in einem unten erläuterten Schritt 208 fortgesetzt.

Wird dagegen in Schritt 202 festgestellt, daß die Zeilenvariable ZV nicht größer Null ist, so wird unmittelbar nach dem Schritt 202 der Schritt 210 ausgeführt. In Schritt 210 wird das nächste empfangene Quellbilddatum verarbeitet. Das bedeutet, daß beim nächsten Abarbeiten des Schritts 204 dieses Quellbilddatum übernommen wird. Wird der Schritt 204 jedoch vor dem nächsten Ausführen des Schritts 210 nicht ausgeführt, so wird das in Schritt 210 geholte Bilddatum nicht als Zielbilddatum übernommen. Das bedeutet, daß dieses Quellbilddatum einfach übersprungen wird. Zu einem Überspringen von Quellbilddaten kommt es, wenn der Zeilenfaktor ZF einen Wert kleiner Eins hat. Wird andererseits der Schritt 204 mehrmals ohne zwischenzeitliche Ausführung des Schritts 210 wiederholt, so bleibt das momentan bearbeitete Quellbilddatum unverändert, so daß aus ihm mehrere Zielbilddaten erzeugt werden. Dies ist bei einem Zeilenfaktor größer Eins der Fall.

Nach dem Schritt 210 wird ein Schritt 212 ausgeführt. In Schritt 212 wird zum momentanen Wert der Zeilenvariablen ZV der Wert des Zeilenfaktors ZF addiert. Anschließend wird das Verfahren in Schritt 208 fortgesetzt.

In Schritt 208 wird geprüft, ob bereits alle Quellbilddaten der bearbeiteten Zeile verarbeitet wurden und somit das Zeilenende erreicht ist. Ist dies nicht der Fall, so wird das Verfahren in Schritt 202 fortgesetzt. Das Verfahren befindet sich somit in einer Schleife aus den Verfahrensschritten 202 bis 208. Diese Schleife wird in Schritt 208 nur dann verlassen, wenn das Zeilenende erreicht ist. In diesem Fall folgt unmittelbar nach dem Schritt 208 der Schritt 214.

In Schritt 214 wird das Verfahren zum Bearbeiten einer Quellbildzeile beendet. Nach dem Schritt 214 folgt jedoch der Schritt 110 (vgl. Figur 1), so daß gegebenenfalls weitere Quellbildzeilen verarbeitet werden.

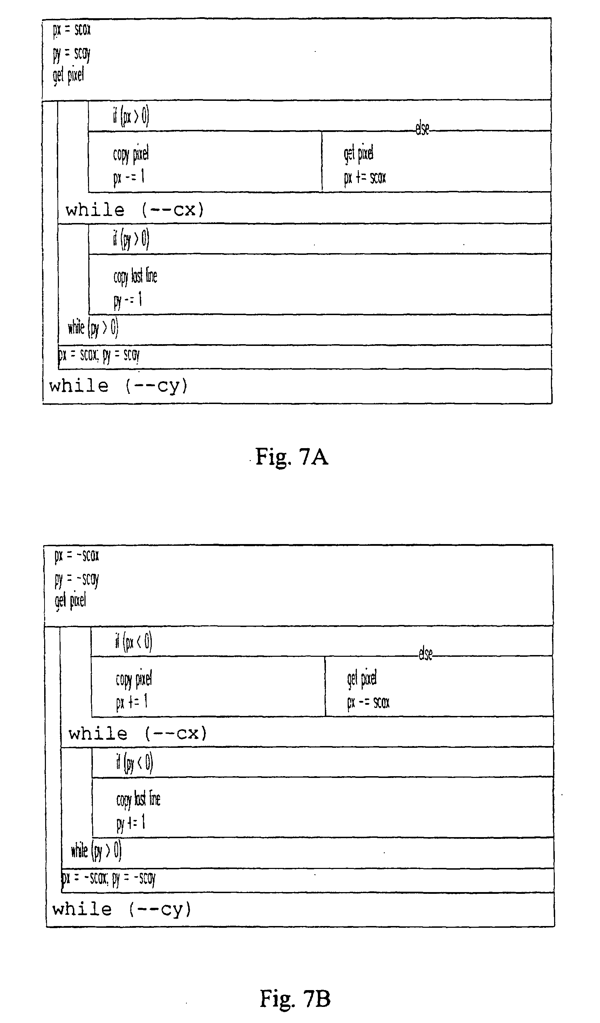

Bei dem in Figuren 1 und 2 beschriebenen Verfahren werden als Vergleichsoperationen 106 bzw. 202 SV > 0 ? bzw. ZV > 0 ? verwendet, in den Schritten 110 bzw. 206 von der Skaliervariablen SV, ZV der Wert Eins subtrahiert und in den Schritten 116 bzw. 212 jeweils der Skalierfaktor SF bzw. ZF zur Zeilenvariablen SV, ZV addiert. Figur 7A zeigt einen im Syntax der Programmiersprache "C" formulierten Auszug, in dem dieses Verfahren verwendet wird. Dabei bedeuten:
px: Pixel- bzw. Spaltenindex
py: Zeilenindex
scx, scy: Skalierungsfaktor in Spalten- bzw. Zeilenrichtung
cx, cy: Anzahl der Pixel pro Zeile bzw. Anzahl der Zeilen pro Bild.

Alternativ zu diesem Verfahren können als Vergleichsoperationen 106 und 202 auch SV < 0 ? und ZV < 0 ? verwendet werden, wenn zur Skaliervariablen SV, ZV in den Schritten 110 und 206 jeweils der Wert Eins addiert wird (SV:=SV+1; ZV:= ZV+1) und in den Schritten 116 und 212 die jeweiligen Skalierfaktoren SF, ZF von der Skaliervariablen SV, ZV subtrahiert werden. Figur 7B zeigt einen Programmauszug für diese Alternative.

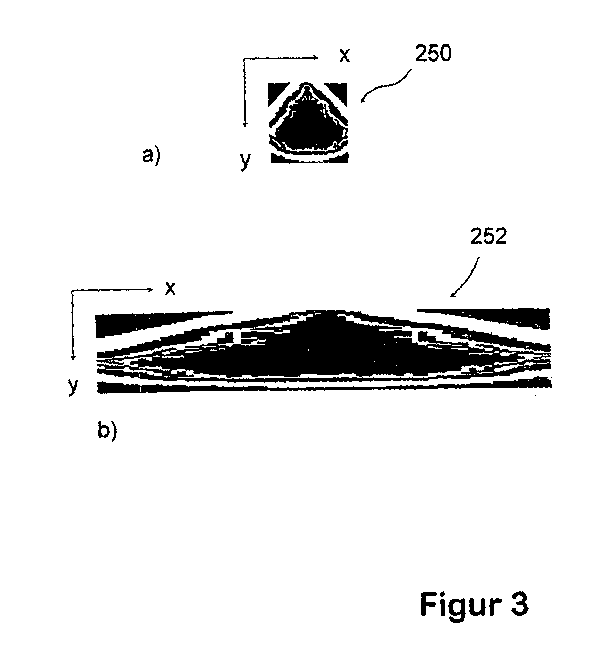

Figur 3 zeigt in einem Teil a ein Quellbild 250, auf dem das sogenannte "Apfelmännchen" dargestellt ist. Das Quellbild 250 hat in Zeilenrichtung (x-Achse) die gleiche Ausdehnung wie in Spaltenrichtung (y-Achse). Nach der Verarbeitung der zum Quellbild 250 gehörenden Quellbilddaten mit dem in den Figuren 1 und 2 gezeigten Verfahren, entsteht aus dem Quellbild 250 ein im Teil b der Figur 3 gezeigtes Zielbild 252. Der Spaltenfaktor SF hat dabei den Wert Eins und der Zeilenfaktor ZF hat den Wert 5,75. Somit ist das Zielbild 252 gegenüber dem Quellbild 250 in Zeilenrichtung (x-Achse) um den Faktor 5,75 gedehnt. In Spaltenrichtung hat das Zielbild 252 die gleiche Ausdehnung wie das Quellbild 250. Die Größe der Bildelemente des Quellbildes 250 stimmt mit der Größe der Zielbildelemente im Zielbild 252 überein. Das Quellbild 250 und das Zielbild 252 haben außerdem die gleiche Auflösung.

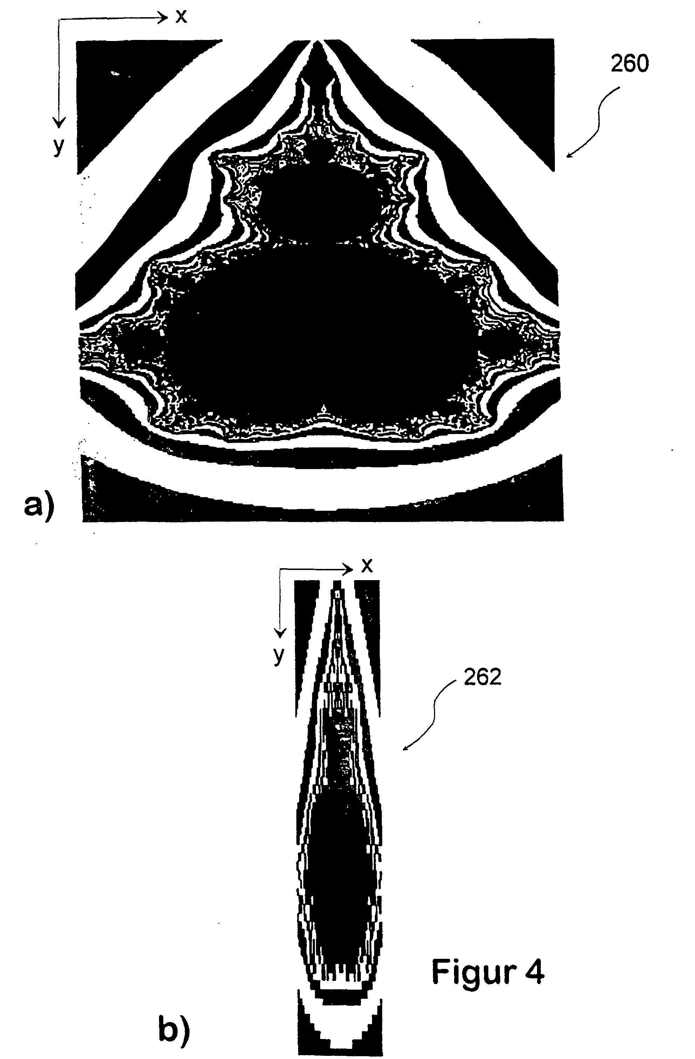

Figur 4 zeigt in einem Teil a ein weiteres Quellbild 260 mit einer Darstellung des. "Apfelmännchens". Das Quellbild 260 hat in Zeilenrichtung (x-Achse) und in Zeilenrichtung (y-Achse) die gleiche Ausdehnung. Durch Bearbeiten der Quellbilddaten des Quellbildes 260 nach dem an Hand der Figuren 1 und 2 erläuterten Verfahren werden Zielbilddaten eines im Teil b der Figur 4 gezeigten Quellbildes 262 erzeugt. Dabei hat der Zeilenfaktor ZF den Wert 0,175, so daß das Zielbild 262 gegenüber dem Quellbild 260 in Zeilenrichtung um diesen Faktor gestaucht ist. Der Spaltenfaktor SF hat den Wert eins, so daß das Zielbild 262 in Spaltenrichtung (y-Achse) die gleiche Ausdehnung wie das Quellbild 260 in Spaltenrichtung hat. Die Größe der Bildelemente des Quellbildes 260 stimmt mit der Größe der Zielbildelemente im Zielbild 262 überein. Außerdem haben das Quellbild 260 und das Zielbild 262 die gleiche Auflösung.

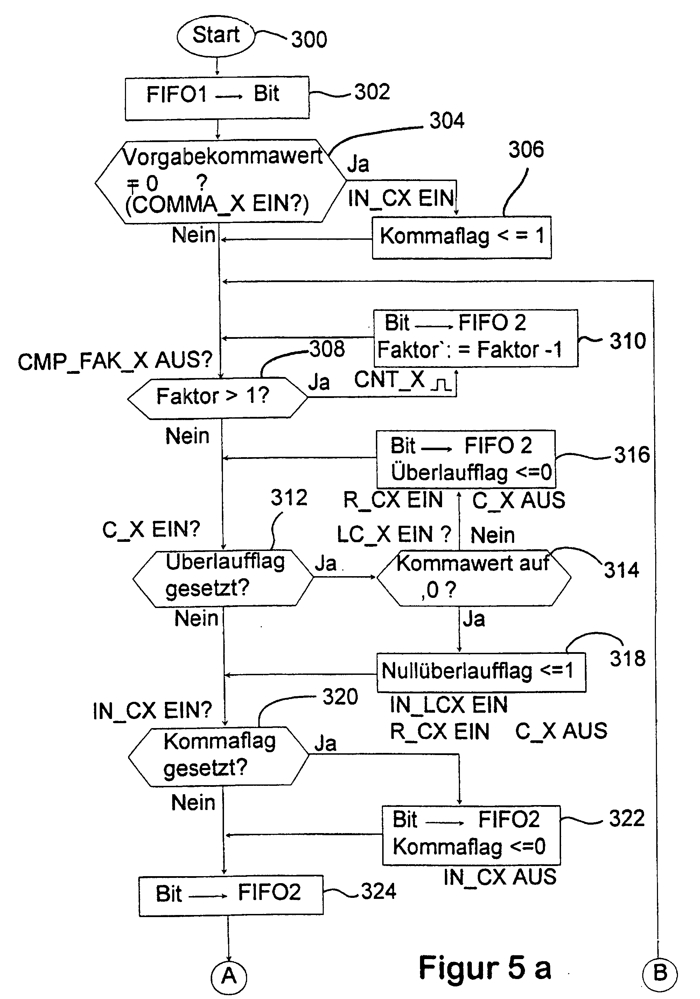

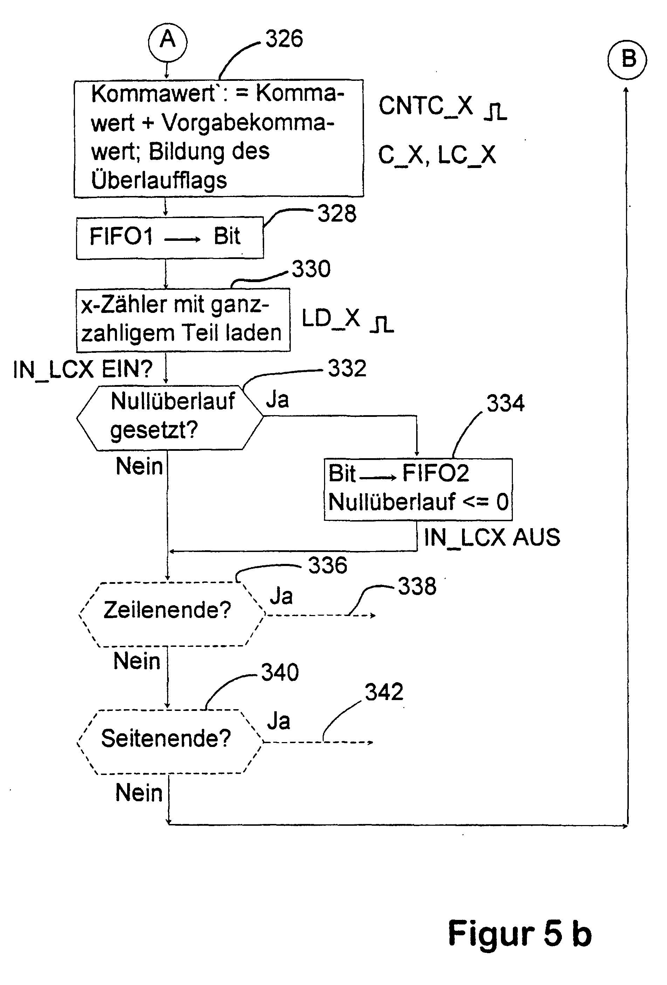

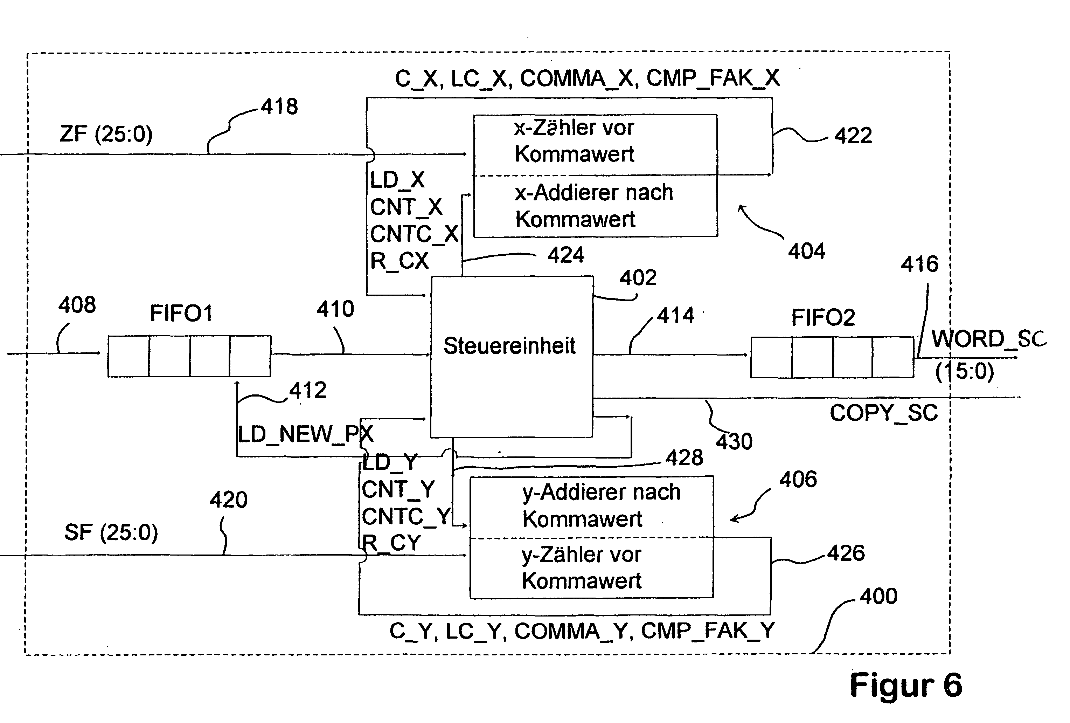

Die Figuren 5A und 5B zeigen ein vereinfachtes Flußdiagramm der Vorgänge in einer digitalen, taktgesteuerten Schaltungsanordnung (vgl. Figur 6), in der das in Figur 2 gezeigte Verfahren durchgeführt wird. Durch die Realisierung der in Figur 2 gezeigten Verfahrensschritte in der Schaltungsanordnung, die nur Schaltzustände hat, ergeben sich Besonderheiten, die im folgenden deutlich werden. Das in den Figuren 5A und 5B gezeigte Flußdiagramm ist eine vereinfachte Darstellung eines Flußdiagramms zur Beschreibung der Schaltungsanordnung in der bekannten Sprache VHDL (very high speed integrated circuit hardware description language).

In einem Schritt 300 wird die Schaltungsanordnung (vgl. Figur 6) durch ein Rücksetzsignal in einen definierten Startzustand gesetzt. Das Startsignal bewirkt, daß die Schaltungsanordnung vorgegebene Signale in ihren Startzustand setzt. Diese Signale werden zum Teil nur in der Schaltungsanordnung und zum anderen Teil auch außerhalb der Schaltungsanordnung abgefragt bzw. zum Steuern von Schaltzuständen verwendet.

Im Schritt 302 beginnt die Schaltungsanordnung mit dem Verarbeiten des ersten Quellbilddatums, das aus einem Speicher FIFO1 gelesen wird, der nach dem FIFO-Prinzip (First In First Out) arbeitet.

Im folgenden Schritt 304 wird der Zustand eines Signals COMMA_X abgefragt, dessen Wert angibt, ob der Zeilenfaktor ZF ganzzahlig oder nicht ganzzahlig ist. Ist der Zeilenfaktor ZF nicht ganzzahlig - das Signal COMMA_X hat den Zustand EIN - (Ja in Schritt 304), so wird in Schritt 306 ein Signal IN_CX in den Zustand EIN eingeschaltet. Da der Schritt 304 nur jeweils für das erste Quellbilddatum der momentan bearbeiteten Quellbildzeile ausgeführt wird, kann beim Zustand EIN des Signals IN_CX auch davon ausgegangen werden, daß das momentan bearbeitete Quellbilddatum das erste Quellbilddatum einer Quellbildzeile ist. Diese Annahme liegt einer unten in Schritt 320 erläuterten Abfrage des Zustandes des Signals IN_CX zugrunde. Nach dem Schritt 306 folgt dann der Schritt 308.

Der Schritt 308 wird jedoch unmittelbar nach dem Schritt 304 ausgeführt, wenn im Schritt 304 festgestellt wird, daß der Zeilenfaktor ZF ganzzahlig ist und somit das Signal COMMA_X den Zustand AUS hat (Nein in Schritt 304). In Schritt 308 wird der Zustand eines Signals CMP_FAK_X abgefragt. Das Signal CMP_FAK_X hat den Zustand EIN, wenn der Zählerstand in einem Vorkommawert-Zähler den Wert Eins hat. Der Zählerstand des Vorkommawert-Zählers repräsentiert den momentanen Wert des ganzzahligen Teils., d.h. des Vorkommateils, der Zeilenvariablen ZV. Bei allen anderen Zählerständen hat das Signal CMP_FAK_X den Zustand AUS, der somit angibt, daß der Vorkommawert der Zeilenvariablen ZV größer eins ist. Ist dies der Fall (Ja in Schritt 308), so wird das momentan bearbeitete Quellbilddatum in Schritt 310 kopiert und die Kopie des Quellbilddatums als Zielbilddatum in einen Speicher FIFO2 geschrieben, der ebenfalls nach dem FIFO-Prinzip (First In First Out) arbeitet. In Schritt 310 wird außerdem ein Signal CNT_X kurzzeitig in den Zustand EIN gesetzt, so daß ein Taktimpuls erzeugt wird, der den Zählerstand des Vorkommawert-Zählers um den numerischen Wert "1" verringert. Nach dem Schritt 310 folgt wieder der Schritt 308, so daß eine Schleife aus den Schritten 308 und 310 abgearbeitet wird, die erst dann verlassen wird, wenn das Signal CMP_FAK_X im Schritt 308 den Zustand EIN hat (Nein im Schritt 308). In diesem Fall folgt unmittelbar nach dem Schritt 308 der Schritt 312.

In Schritt 312 wird der Zustand eines Signals C_X abgefragt, das den Zustand EIN hat, wenn in einem Nachkommawert-Addierer ein Überlauf stattgefunden hat. Im Nachkommawert-Addierer ist der momentane Wert des Nachkommawerts der Zeilenvariablen ZV gespeichert, zu dem zyklisch der Nachkommawert des Zeilenfaktors ZF addiert wird (vgl. unten Schritt 326). Ein Überlauf findet statt, wenn das Ergebnis der Addition größer als die größte im Nachkommawert-Addierer darstellbare Zahl ist. Wenn bei der letzten Addition im Nachkommawert-Addierer kein Überlauf auftrat, so hat das Signal C_X den Zustand AUS.

Hat das Signal C_X in Schritt 312 den Zustand EIN (Ja in Schritt 312), so wird unmittelbar nach dem Schritt 312 der Schritt 314 ausgeführt. In Schritt 314 werden abhängig vom Zustand eines Signals LC_X unterschiedliche Folgeschritte ausgeführt. Das Signal LC_X hat den Zustand EIN, wenn beim Überlauf im Nachkommawert-Addierer das Additionsergebnis Null ist. Andernfalls hat das Signal LC_X den Zustand AUS. Ist dies der Fall, so wird in Schritt 316 das momentan bearbeitete Quellbilddatum kopiert und als Zielbilddatum in den Speicher FIFO2 geschrieben. Außerdem wird in Schritt 316 das Signal C_X für den Überlauf in den Zustand AUS gesetzt. Dies erfolgt durch Setzen eines Signals R_CX auf den Zustand EIN. Danach wird wieder der Schritt 312 ausgeführt, in dem diesmal jedoch festgestellt wird, daß das Signal C_X den Zustand AUS hat. Hat im Schritt 314 das Signal LC_X dagegen den Zustand EIN, d.h. beim Überlauf des Nachkommawert-Addierers war das Additionsergebnis im Addierer Null, so folgt nach Schritt 314 Schritt 318.

In Schritt 318 wird ein Signal IN_LCX in den Zustand EIN gesetzt. Somit zeigt der Zustand das Signals IN_LCX an, ob beim Überlauf im Nachkommawert-Addierer ein Nachkommawert von Null (Zustand EIN) oder größer Null (Zustand AUS) aufgetreten ist. Außerdem wird in Schritt 318 das Signal C_X für den Überlauf in den Zustand AUS gesetzt. Dies erfolgt durch Setzen des Signals R_CX auf den Zustand EIN. Nach Schritt 318 folgt Schritt 320.

Der Schritt 320 wird auch unmittelbar nach dem Schritt 312 ausgeführt, wenn in Schritt 312 das Signal C_X für den Überlauf den Zustand AUS hat. In Schritt 320 hängt die weitere Verarbeitung vom Zustand des Signals IN_CX ab. Wie bereits erwähnt, hat dieses Signal nur dann den Zustand EIN, wenn der Zeilenfaktor ZF nicht ganzzahlig ist und momentan das erste Quellbilddatum einer Quellbildzeile bearbeitet wird. Hat das Signal IN_CX im Schritt 320 den Zustand EIN, so folgt Schritt 322. In Schritt 322 wird das momentan verarbeitete Quellbilddatum kopiert und als Zielbilddatum in den Speicher FIFO2 geschrieben. Außerdem wird in Schritt 322 das Signal IN_CX in den Zustand AUS gesetzt. Nach Schritt 322 wird Schritt 324 ausgeführt.

Schritt 324 wird auch unmittelbar nach Schritt 320 ausgeführt, falls in Schritt 320 das Signal IN_CX den Zustand AUS hat. In Schritt 324 wird das momentan bearbeitete Quellbilddatum als Zielbilddatum übernommen und in den Speicher FIFO2 geschrieben. Anschließend wird der in Figur 5B gezeigte Schritt 326 ausgeführt.

In Schritt 326 wird ein Signal CNTC_X kurzzeitig in den Zustand EIN geschaltet, so daß ein Taktimpuls erzeugt wird, der am Nachkommawert-Addierer anliegt. Daraufhin gibt der Nachkommawert-Addierer an seinem Ausgang einen um den Nachkommawert des Zeilenfaktors ZF erhöhten Wert aus. Tritt bei der Addition ein Überlauf auf, so wird das Signal C_X in den Zustand EIN geschaltet. Abhängig vom Ausgangswert des Addierers nach der Addition wird das Signal LC_X auf den Wert EIN gesetzt, falls der Ausgangswert Null ist, und auf den Wert AUS, falls der Ausgangswert des Addierers größer als Null ist.

In Schritt 328 wird das nächste Quellbilddatum aus dem Speicher FIFO1 gelesen und als momentan bearbeitetes Quellbilddatum behandelt. Anschließend folgt Schritt 330. In Schritt 330 wird ein Signal LD_X kurzzeitig in den Zustand EIN geschaltet, so daß ein Taktimpuls entsteht, der den Vorkommawert-Zähler mit dem ganzzahligen Teil des Zeilenfaktors ZF als Startwert lädt. Der Zählerstand des Vorkommawert-Zählers wird dann beim Ausführen des Schritts 310 ausgehend von dem Startwert verringert.

In Schritt 332 wird der Zustand des Signals IN_LCX abgefragt, das den Zustand EIN hat, falls beim Überlauf des Nachkommawert-Addierers ein Überlauf auf Null aufgetreten ist. Ist dies der Fall, so wird ein Schritt 334 ausgeführt, in dem das im Schritt 328 gelesene momentan bearbeitete Quellbilddatum als Zielbilddatum übernommen wird. Das Zielbilddatum wird dann in den Speicher FIFO2 geschrieben. Außerdem wird in Schritt 334 der Zustand des Signals IN_LCX auf AUS geschaltet. Anschließend wird der Schritt 336 ausgeführt. Dieser Schritt wird auch unmittelbar nach dem Schritt 340 ausgeführt, falls in diesem Schritt das Signal IN_LCX den Zustand AUS hat.

In Schritt 336 wird der Zustand eines Signals abgefragt, das angibt, ob das letzte Quellbilddatum einer Zeile bereits bearbeitet wurde. Ist dies der Fall, so werden Schritte durchgeführt, die die Bearbeitung einer neuen Zeile des Quellbildes vorbereiten. Die Ausführung dieser Schritte ist durch einen Pfeil 338 nur angedeutet und wird nicht erläutert, da sie für das Verständnis der Erfindung nicht wesentlich ist. Wird dagegen in Schritt 336 festgestellt, daß das letzte Quellbilddatum der momentan bearbeiteten Quellbildzeile noch nicht bearbeitet wurde, so wird unmittelbar nach dem Schritt 336 der Schritt 340 ausgeführt.

In Schritt 340 wird ein Signal abgefragt, dessen Zustand angibt, ob bereits das letzte Quellbilddatum zu einem Quellbildelement des Quellbildes bearbeitet wurde. Ist dies der Fall, so wird die Verarbeitung der Quellbilddaten eines nächsten Quellbildes vorbereitet. Die dazu notwendigen Schritte sind in den Figuren 5A und 5B nicht dargestellt und werden nur durch einen Pfeil 342 angedeutet. Wird in Schritt 340 dagegen festgestellt, daß noch nicht alle Quellbilddaten eines Quellbildes und damit in einem Drucker auch alle Quellbilddaten des Druckbildes bearbeitet sind, so wird unmittelbar nach dem Schritt 340 der Schritt 308 erneut ausgeführt.

Durch mehrmaliges Abarbeiten der Schritte 308 bis 342 werden nacheinander die Quellbilddaten zu den Quellbildelementen einer Zeile des Quellbildes die Zielbilddaten zu den Zielbildelementen einer Zeile des Zielbildes erzeugt.

Figur 6 zeigt ein Blockschaltbild der Schaltungsanordnung 400, deren Schaltverhalten an Hand des Flußdiagramms in den Figuren 5A und 5B erläutert wurde. Die in Figur 6 gezeigte Schaltungsanordnung 400 ist wie bereits erwähnt, eine digitale, getaktete Schaltung, die vorzugsweise in einem einzigen ASIC-Baustein (anwenderspezifischer integrierter Schaltkreis) enthalten ist. Zur Vereinfachung der Darstellung sind in Figur 6 alle Taktleitungen zu den einzelnen Funktionseinheiten weggelassen worden. Außerdem sind in der Figur 6 Leitungen für Rücksetzimpulse nicht gezeigt, mit denen die Schaltungsanordnung 400 in einen definierten Anfangszustand gesetzt wird.

Die Schaltungsanordnung 400 enthält die Speicher FIFO1 und FIFO2, eine Steuereinheit 402, eine Zeilenfaktoreinheit 404, sowie eine Spaltenfaktoreinheit 406.

Die Speicher FIFO1 und FIFO2 arbeiten nach dem bekannten FIFO-Prinzip, bei dem zuerst eingeschriebene Daten auch zuerst wieder ausgelesen werden. Sie bilden mit der Steuereinheit 402 eine sogenannte Pipeline-Struktur, bei der zu bearbeitende Daten gleichzeitig von FIFO 1 in die Steuereinheit 402 eingelesen werden können, während aus der Steuereinheit 402 verarbeitete Daten in FIFO 2 abgespeichert werden. In Figur 6 sind Leitungen zur Statusabfrage der Speicher FIFO1 und FIFO2 nicht dargestellt. Es wird vorausgesetzt, daß die Steuereinheit 402 aus dem Speicher FIFO1 nur dann ein Quellbilddatum liest, wenn im Speicher FIFO1 mindestens ein Quellbilddatum gespeichert ist. Andererseits schreibt die Steuereinheit 402 in den Speicher FIFO2 nur dann ein Zielbilddatum, wenn noch nicht alle Speicherzellen des Speichers FIFO2 belegt sind.

Über eine Schreibleitung 408 werden die Quellbilddaten von außen nacheinander in den Speicher FIFO1 geschrieben. Eine Leseleitung 410 zwischen Speicher FIFO1 und Steuereinheit 402 überträgt die Quellbilddaten beim Auslesen aus dem Speicher FIFO1 zur Steuereinheit 402. Der Zustand eines Signals LD_NEW_PX auf einer Steuerleitung 412 steuert das Auslesen von Quellbilddaten aus dem Speicher FIFO1. Der Zustand dieses Signals wird durch die Steuereinheit 402 gesetzt.

Die Steuereinheit 402 ist ausgangsseitig mit dem Eingang des Speichers FIFO2 über eine Schreibleitung 414 elektrisch verbunden. Auf dieser Leitung werden Zielbilddaten von der Steuereinheit 402. zum Speicher FIFO2 übertragen, bis sie über einen Lesebus 416 mit einer Bitbreite von 16 Bit aus dem Speicher FIFO2 gelesen werden. Der Lesebus 416 wird aus der Schaltungsanordnung 400 herausgeführt, so daß über ihn Daten z.B. zu einem Druckkopf eines Druckers oder in einen Speicher übertragen werden können.

Über eine Datenleitung 418 wird der Zeilenfaktor ZF von außen in einem 26 Bit langem Datenwort zur Zeilenfaktoreinheit 44 übermittelt. Über eine weitere Datenleitung 420 wird der Spaltenfaktor SF von außen in einem 26 Bit langen Datenwort an die Spaltenfaktoreinheit 406 übermittelt. Die Datenleitungen 418 und 420 kommen somit von Schaltungseinheiten, die nicht zur Schaltungsanordnung 400 gehören.

Die Zeilenfaktoreinheit 404 enthält den bereits erwähnten Vorkommawert-Zähler und den Nachkommawert-Addierer in denen der Vorkommawert bzw. der Machkommawert der Zeilenvariablen ZV bearbeitet wird. Die Zeilenfaktoreinheit 404 ist ausgangsseitig über einen Steuerbus 422 mit einem Eingang der Steuereinheit 402 verbunden. Auf dem Steuerbus 422 werden die Zustände der Signale C_X, LC_X, COMMA_X und CMP_FAK_X der Steuereinheit 402 signalisiert. Andererseits ist die Steuereinheit 402 ausgangsseitig über einen Steuerbus 424 mit der Zeilenfaktoreinheit 404 verbunden. Auf dem Steuerbus 424 werden die Zustände der Signale LD_X, CNT_X, CNTC_X und R_CX von der Steuereinheit 402 an die Zeilenfaktoreinheit 404 signalisiert.

Die Spaltenfaktoreinheit 406 enthält einen Vorkommawert-Zähler, in welchem der Vorkommawert der Spaltenvariablen SV bearbeitet wird. Außerdem enthält die Spaltenfaktoreinheit 406 einen Nachkommawert-Addierer, in dem der Nachkommawert der Spaltenvariablen SV bearbeitet wird. Ausgangsseitig ist die Spaltenfaktoreinheit 406 über einen Steuerbus 426 mit Eingängen der Steuereinheit 402 verbunden. Auf diesem Steuerbus werden Signale C_Y, LC_Y, COMMA_Y und CMP_FAK_Y an die Steuereinheit weitergeleitet, die im wesentlichen die gleiche Funktion haben, wie die Signale auf dem Steuerbus 422, jedoch auf die Bearbeitung der Spaltenvariablen SV bezogen sind.

Über einen Steuerbus 428 ist die Steuereinheit 402 mit der Spaltenfaktoreinheit 406 verbunden. Signale LD_Y, CNT_Y, CNTC_Y und R_CY, die auf dem Steuerbus 428 von der Steuereinheit 402 an die Spaltenfaktoreinheit 406 signalisiert werden, haben im wesentlichen die gleiche Funktion wie die Signale, die auf dem Steuerbus 424 zur Zeilenfaktoreinheit 404 übertragen werden, sind jedoch auf die Bearbeitung der Spaltenvariablen SV bezogen.

Die Steuereinheit 402 hat weiterhin eine Ausgangsleitung 430, die den Zustand eines Signals COPY_SC an außerhalb der Schaltungsanordnung 400 liegende Schaltungseinheiten signalisiert. Das Signals COPY_SC hat den Zustand EIN, falls die Zielbilddaten der zuletzt bearbeiteten Quellbildzeile zu kopieren sind.

### Bezugszeichenliste

- SF: Spaltenfaktor
- ZF: Zeilenfaktor
- SV: Spaltenvariable
- ZV: Zeilenvariable
- 100: Start
- 102: SV: = SF (Spaltenfaktor)
- 104: SV: = ZF (Zeilenfaktor)
- 106: SV > 0
- 108: Erzeuge Zielbildzeile bzw. Kopiere Zielbildzeile
- 110: SV: = SV-1
- 112: Bildende
- 114: nächste Quellbildzeile
- 116: SV: = SV + SF
- 118: Ende
- 200: Start
- 202: ZV > 0
- 204: Kopiere Bilddatum
- 206: ZV: = ZV-1
- 208: Zeilenende
- 210: hole nächstes Bilddatum
- 212: ZV: = ZV+ZF
- 214: Ende
- 250, 260: Quellbild
- 252, 262: Zielbild
- 300: Start
- 302: FIFO1 →Bit
- 304: Vorgabekommawert ≠0 (COMMA_X EIN)
- 306: Kommaflag <=1
- 308: Faktor >1
- 310: Bit →FIFO2, Faktor': = Faktor-1
- 312: Überlaufflag gesetzt
- 314: Kommawert auf ,0
- 316: Bit →FIFO2, Überlaufflag <=0
- 318: Nullüberlaufflag <=1
- 320: Kommaflag gesetzt
- 322: Bit →FIFO2 Kommaflag <=0
- 324: Bit →FIFO2
- 326: Kommawert': = Kommawert + Vorgabekommawert; Bildung des Überlaufflags
- 328: FIFO1 →Bit
- 330: x-Zähler mit ganzzahligem Teil laden
- 332: Nullüberlaufflag gesetzt
- 334: Bit →FIFO2 Nullüberlaufflag <=0
- 336: Zeilenende
- 338: Pfeil
- 340: Seitenende
- 342: Pfeil
- FIFO1, FIFO2: Speicher
- COMMA_X: Signal, EIN - wenn Zeilenfaktor nicht ganzzahlig
- IN_CX: Signal, EIN - wenn erstes Quellbilddatum einer Zeile und wenn COMMA_X auf EIN
- CMP_FAK_X: Signal, EIN - wenn Zählerstand in Vorkommawert-Zähler (ZV) gleich Eins
- CNT_X: Signal, Takt zum Dekrementieren des Vorkommawert-Zählers (ZV)
- C_X: Signal, EIN - wenn Überlauf im Nachkommawert-Addierer (ZV)
- LC_X: Signal, EIN - wenn Zeilenfaktor nicht ganz-zahlig
- R_CX: Hilfssignal zum Setzen von C_X
- IN_LCX: Signal, EIN - wenn LC_X auf EIN
- CNTC_X: Signal, Takt zum Addieren des Nachkommawerts im Nachkommawert-Addierer (ZV)
- LD_X: Signal, Takt - Vorkommawert-Zähler (ZV) laden
- LD_NEW_PX: FIFO1 lesen
- COMMA_Y: Signal, EIN - wenn Spaltenfaktor nicht ganzzahlig
- IN_CY: Signal, EIN - wenn erstes Quellbilddatum einer Zeile und wenn COMMA_Y auf EIN
- CMP_FAK_Y: Signal, EIN - wenn Zählerstand in Vorkommawert-Zähler (SV) gleich Eins
- CNT_Y: Signal, Takt zum Dekrementieren des Vorkommawert-Zählers (SV)
- C_Y: Signal, EIN - wenn Überlauf im Nachkommawert-Addierer (SV)
- LC_Y: Signal, EIN - wenn Überlauf in Nachkommawert-Addierer (SV) gleich Null
- R_CY: Hilfssignal zum Setzen von C_Y
- IN_LCY: Signal, EIN - wenn LC_Y auf EIN
- CNTC_Y: Signal, Takt zum Addieren des Nachkommawerts im Nachkommawert-Addierer (SV)
- LD_X: Signal, Takt - Vorkommawert-Zähler (ZV) laden
- LD_NEW_PX: FIFO1 lesen
- 400: Schaltungsanordnung
- 402: Steuereinheit
- 404: Zeilenfaktoreinheit
- 406: Spaltenfaktoreinheit
- 408: Schreibleitung
- 410: Leseleitung
- 412: Steuerleitung
- 414: Schreibleitung
- 416: Lesebus
- 418, 420: Datenleitung
- 422, 424: Steuerbus
- 426, 428: Steuerbus
- 430: Leitung

## Patentansprüche

1. Verfahren zum Verarbeiten von Bilddaten,
bei dem ein zu bearbeitendes Quellbild (250; 260) matrixförmig angeordnete Quellbildelemente enthält, denen jeweils ein Quellbilddatum zugeordnet ist, welches die Darstellung des jeweiligen Quellbildelements festlegt,
ein bei der Weiterverarbeitung der Quellbilddaten entstehendes Zielbild (252; 262) matrixförmig angeordnete Zielbildelemente enthält, denen jeweils ein Zielbilddatum zugeordnet ist, welches die Darstellung des jeweiligen Zielbildelementes festlegt,
ein Skalierfaktor (ZF, SF) vorgegeben wird, der das Verhältnis der Zahl von Zielbildelementen je Zeile oder Spalte des Zielbildes (252; 262) zur Zahl von Quellbildelementen je Zeile oder Spalte des Quellbildes (250; 260) festlegt,
die Queilbilddaten zu aufeinanderfolgenden Quellbildelementen einer Zeile oder Spalte des Quellbildes (250; 260) nacheinander verarbeitet werden,
wobei eine Skaliervariable (ZV, SV), ausgehend von einem Startwert, vorgegeben wird, und zyklisch
a) die Skaliervariable (ZV, SV) mit einem Vergleichswert verglichen wird und
b) in Abhängigkeit vom Vergleichsergebnis entschieden wird, ob
b1) ein Quellbilddatum als Zielbilddatum übernommen und zur Skaliervariablen ein konstanter Wert, insbesondere der Wert Eins, addiert wird oder
b2) von der Skaliervariable (SV, ZV) der Skalierfaktor (SF, ZF) subtrahiert wird,
wobei der Startwert und das Vergleichskriterium derart festgelegt sind, daß das erste Quellbilddatum als Zielbilddatum übernommen wird und
wobei die Verarbeitung in einem Pipeline-Prozeß derart erfolgt, daß die Bilddaten in einem Verarbeitungstakt über eine erste Datenleitung (410) zeilen- oder spaltenweise von einem ersten Speicher (FIFO 1) in eine Verarbeitungseinheit (402 bis 406) geladen, dort in mindestens einem nachfolgenden Takt verarbeitet und anschließend in einem weiteren Takt über eine von der ersten Datenleitung (410) getrennten, zweiten Leitung (414) in einen zweiten Speicher (FIFO 2) geladen werden.

2. Verfahren zum Verarbeiten von Bilddaten, insbesondere in einem Drucker,
bei dem ein zu bearbeitendes Quellbild (250; 260) matrixförmig angeordnete Quellbildelemente enthält, denen jeweils ein Quellbilddatum zugeordnet ist, welches die Darstellung des jeweiligen Quellbildelements festlegt,
ein bei der Weiterverarbeitung der Quellbilddaten entstehendes Zielbild (252; 262) matrixförmig angeordnete Zielbildelemente enthält, denen jeweils ein Zielbilddatum zugeordnet ist, welches die Darstellung des jeweiligen Zielbildelementes festlegt,
ein Skalierfaktor (ZF, SF) vorgegeben wird, der das Verhältnis der Zahl von Zielbildelementen je Zeile oder Spalte des Zielbildes (252; 262) zur Zahl von Quellbildelementen je Zeile oder Spalte des Quellbildes (250; 260) festlegt,
die Quellbilddaten zu aufeinanderfolgenden Quellbildelementen einer Zeile oder Spalte des Quellbildes (250; 250) nacheinander verarbeitet werden,
wobei eine Skaliervariable (ZV, SV), ausgehend von einem Startwert, vorgegeben wird, und zyklisch
a) die Skaliervariable (ZV, SV) mit einem Vergleichswert verglichen wird und
b) in Abhängigkeit vom Vergleichsergebnis entschieden wird, ob
b1) ein Quellbilddatum als Zielbilddatum übernommen und von der Skaliervariable ein konstanter wert, insbesondere der Wert Eins, subtrahiert wird oder
b2) zur Skaliervariable (SV, ZV) der Skalierfaktor (SF, ZF) addiert wird,
wobei der Startwert und das Vergleichskriterium derart festgelegt sind , daß das erste Quellbilddatum als Zielbilddatum übernommen wird und
wobei die Verarbeitung in einem Pipeline-Prozeß derart erfolgt, daß die Bilddaten in einem Verarbeitungstakt über eine erste Datenleitung (410) zeilen- oder spaltenweise von einem ersten Speicher (FIFO 1) in eine Verarbeitungseinheit (402 bis 406) geladen, dort in mindestens einem nachfolgenden Takt verarbeitet und anschließend in einem weiteren Takt über eine von der ersten Datenleitung (410) getrennten, zweiten Leitung (414) in einen zweiten Speicher (FIFO 2) geladen werden.

3. Verfahren nach Anspruch 1 oder 2, **dadurch gekennzeichnet, daß** zumindest die Verarbeitungseinheit (402 bis 406), insbesondere auch die beiden Speicher (FIFO 1, FIFO 2) in einem anwenderspezifischen, integrierten Schaltkreis (ASIC) enthalten sind.

4. Verfahren zum Verarbeiten von Bilddaten, insbesondere in einem Drucker,
bei dem ein zu bearbeitendes Quellbild (250; 260) matrixförmig angeordnete Quellbildelemente enthält, denen jeweils ein Quellbilddatum zugeordnet ist, welches die Darstellung des jeweiligen Quellbildelements festlegt,
ein bei der Weiterverarbeitung der Quellbilddaten entstehendes Zielbild (252; 262) matrixförmig angeordnete Zielbildelemente enthält, denen jeweils ein Zielbilddatum zugeordnet ist, welches die Darstellung des jeweiligen Zielbildelementes festlegt,
ein Skalierfaktor (ZF, SF) vorgegeben wird, der das Verhältnis der Zahl von Zielbildelementen je Zeile oder Spalte des Zielbildes (252; 262) zur Zahl von Quellbildelementen je Zeile oder Spalte des Quellbildes (250; 260) festlegt,
der Skalierfaktor (ZF, SF) als Startwert für eine Skaliervariable (ZV, SV) verwendet wird,
die Quellbilddaten zu aufeinanderfolgenden Quellbildelementen einer Zeile oder Spalte des Quellbildes (250; 260) nacheinander verarbeitet werden,
wobei zyklisch die folgenden Schritte ausgeführt werden:
a) falls der momentane Wert der Skaliervariablen (ZV, SV) größer als Null ist, wird das momentan bearbeitete Quellbilddatum kopiert und als Zielbilddatum verwendet, ferner wird der momentane Wert der Skaliervariablen (ZV, SV) um den numerischen Wert "1" verringert (Schritte 204, 206),
b) falls der momentane Wert der Skaliervariablen (ZV) nicht größer Null ist, wird das nächste Quellbilddatum an Stelle des momentanen bearbeiteten Quellbilddatums verwendet, ferner wird zum momentanen Wert der Skaliervariablen (ZV, SV) der Wert des Zeilenfaktors (ZF) addiert (Schritte 210, 212),
wobei die nacheinander erzeugten Zielbilddaten zu aufeinanderfolgenden Zielbildelementen einer Zeile oder Spalte des Zielbildes (252; 262) gehoren und
wobei die Verarbeitung in einem Pipeline-Prozeß derart erfolgt, daß die Bilddaten in einem Verarbeitungstakt über eine erste Datenleitung (410) zeilen- oder spaltenweise von einem ersten Speicher (FIFO 1) in eine Verarbeitungseinheit (402 bis 406) geladen, dort in mindestens einem nachfolgenden Takt verarbeitet und anschließend in einem weiteren Takt über eine von der ersten Datenleitung (410) getrennten, zweiten Leitung (414) in einen zweiten Speicher (FIFO 2) geladen werden.

5. Verfahren nach Anspruch 4, **dadurch gekennzeichnet, daß** das Verfahren nacheinander sowohl für Bildzeilen als auch für Bildspalten durchgeführt wird, wobei zur Verarbeitung von Zeilendaten ein Zeilenfaktor (ZF) als Skalierfaktor und zur Verarbeitung von Spaltendaten ein Spaltenfaktor (SF) als Skalierfaktor vorgegeben wird.

6. Verfahren nach Anspruch 4 oder 5, **dadurch gekennzeichnet, daß** die Zielbilddaten im Schritt A nur dann nach dem Zeilenbearbeitungsverfahren erzeugt werden, wenn zu den momentan bearbeiteten Quellbilddaten noch keine Zielbilddaten nach dem vorgegebenen Zeilenbearbeitungsverfahren erzeugt wurden,
und daß andernfalls die bereits nach dem vorgegebenen Zeilenbearbeitungsverfahren erzeugten Zielbilddaten verwendet werden.

7. Verfahren nach einem der Ansprüche 5 oder 6, **dadurch gekennzeichnet, daß** ein Zeilenfaktor (ZF) vorgegeben wird, der das Verhältnis der Zahl von Zielbildelementen je Zeile des Zielbildes (252; 262) zur Zahl von Quellbildelementen je Zeile des Quellbildes (250; 260) festlegt,
der Zeilenfaktor (ZF) als Startwert für eine Zeilenvariable (ZV) verwendet wird,
die Quellbilddaten zu aufeinanderfolgenden Queilbildelementen mindestens einer Zeile des Quellbildes (250; 260) nacheinander verarbeitet werden,
wobei beim Ausführen des Zeilenbearbeitungsverfahrens die folgenden Schritte zyklisch ausgeführt werden:
a) falls der momentane Wert der Zeilenvariablen (ZV) größer als Null ist, wird das momentan bearbeitete Quelibilddatum kopiert und als Zielbilddatum verwendet, ferner wird der momentane Wert der Zeilenvariablen (ZV) um den numerischen Wert "1" verringert (Schritte 204, 206),
b) falls der momentane Wert der Zeilenvariablen (ZV) nicht größer Null ist, wird das nächste Quellbilddatum an Stelle des momentanen bearbeiteten Quellbilddatums verwendet, ferner wird zum momentanen Wert der Zeilenvariablen (ZV) der Wert des Zeilenfaktors (ZF) addiert (Schritte 210, 212).

8. Verfahren nach einem der vorhergehenden Ansprüche, **dadurch gekennzeichnet, daß** der Wert der Zeilenvariablen (ZV) und/oder der Spaltenvariablen (SV) in einen Vorkommawert und einen Nachkommawert getrennt ist.

9. Verfahren nach Anspruch 8, **dadurch gekennzeichnet, daß** der Vorkommawert ein Zählerwert in einem Zähler ist.

10. Verfahren nach Anspruch 9, **dadurch gekennzeichnet, daß** der Zählerwert von einem vorgegebenen Startwert aus dekrementiert wird und daß der Startwert der ganzzahlige Vorkommawert des Zeilenfaktors (ZF) oder des Spaltenfaktors (SF) ist.

11. Verfahren nach Anspruch 9 oder 10, **dadurch gekennzeichnet, daß** der Zähler digitale Grundgatter enthält.

12. Verfahren nach einem der Ansprüche 8 bis 11, **dadurch gekennzeichnet, daß** der Nachkommawert in einem Addierer für ganzzahlige Addition berechnet wird,
und daß der Addierer vorzugsweise digitale Grundgatter enthält.

13. Verfahren nach einem der vorhergehenden Ansprüche, wobei bei einem Skalierfaktor (SF, ZF), der größer als eins ist, aus den Quellbilddaten einer momentan bearbeiteten Gruppe von Quellbilddaten die Zielbilddaten mehrerer Gruppen von Zielbilddaten erzeugt werden, indem aus der Gruppe von Quellbilddaten nur eine Gruppe von Zielbilddaten erzeugt wird, diese gespeichert und anschließend solange kopiert wird, bis die nächste Gruppe von Quellbilddaten taktgesteuert bearbeitet wird.

14. Schaltungsanordnung (400) zum Verarbeiten von Bilddaten,
mit einer als erster Speicher (FIFO 1) ausgebildeten Eingabeeinheit, die Quellbilddaten zu Quellbildelementen eines Quellbildes (250; 260) empfängt, in welchem die Quellbildelemente matrixförmig angeordnet sind und
einer Verarbeitungseinheit (402 bis 406), die gemäß einem vorgegebenen Zeilenfaktor (ZF) die Quellbilddaten zu Zielbilddaten weiterverarbeitet,
wobei die Verarbeitung in einem Pipeline-Prozeß derart erfolgt, daß die Bilddaten in einem Verarbeitungstakt über eine erste Datenleitung (410) zeilen- oder spaltenweise von dem ersten Speicher (FIFO 1) in die Verarbeitungseinheit (402 bis 406) geladen, dort in mindestens einem nachfolgenden Takt verarbeitet und anschließend in einem weiteren Takt über eine von der ersten Datenleitung (410) getrennten, zweiten Leitung (414) in einen zweiten Speicher (FIFO 2) zum Ausgeben der nacheinander erzeugten Bilddaten geladen werden,
wobei der Zeilenfaktor (ZF) als Startwert für eine Zeilenvariable (ZV) verwendet wird,
die Quellbilddaten zu aufeinanderfolgenden Quellbilddaten mindestens einer Zeile des Quellbildes (250; 260) nacheinander verarbeitet werden,
und wobei zyklisch die folgenden Schritte ausgeführt werden:
a) falls der momentane Wert der Zeilenvariablen (ZV) größer als Null ist, wird das momentan bearbeitete Quellbilddatum kopiert und als Zielbilddatum verwendet, ferner wird der momentane Wert der Zeilenvariablen (ZV) um den numerischen Wert "1" verringert (Schritte 204, 206),
b) falls der momentane Wert der Zeilenvariablen (ZV) nicht größer Null ist, wird das nächste Quellbilddatum an Stelle des momentanen bearbeiteten Quellbilddatums verwendet, ferner wird zum momentanen Wert der Zeilenvariablen (ZV) der Wert des Zeilenfaktors (ZF) addiert (Schritte 210, 212).

15. Schaltungsanordnung (400) zum Verarbeiten von Bilddaten,
mit einer Eingabeeinheit (FIFO1), die Quellbilddaten zu Quellbildelementen eines Quellbildes (250; 260) empfängt, in welchem die Quellbildelemente matrixförmig angeordnet sind,
einer Verarbeitungseinheit (402 bis 406), die gemäß einem vorgegebenen Spaltenfaktor (SF) die Quellbilddaten zu Zielbilddaten weiterverarbeitet,
wobei der Spaltenfaktor (SF) als Startwert für eine Spaltenvariable (SV) verwendet wird,
die Quellbilddaten zu aufeinanderfolgenden Zeilen des Quellbildes (250; 260) nacheinander bearbeitet werden,
wobei zyklisch die folgenden Schritte durchgeführt werden:
A) falls der momentane Wert der Spaltenvariablen (SV) größer als Null ist, werden aus den momentan bearbeiteten Quellbilddaten nach einem vorgegebenen Zeilenbearbeitungsverfahren Zielbilddaten erzeugt, ferner wird der momentane Wert der Spaltenvariablen (SV) um den numerischen Wert "1" verringert (Schritte 108, 110),
B) falls der momentane Wert der Spaltenvariablen (SV) nicht größer Null ist, werden die Quellbilddaten der nächsten Zeile an Stelle der momentan bearbeiteten Quellbilddaten verwendet, ferner wird zum momentanen Wert der Spaltenvariablen (SV) der Wert des Spaltenfaktors (SF) addiert (Schritte 114, 116),
und mit einer Ausgabeeinheit (FIFO2) zum Ausgeben der nacheinander erfolgten Zielbilddaten,
wobei die Bilddaten in einem Verarbeitungstakt über eine erste Datenleitung (410) zeilen- oder spaltenweise von einem ersten Speicher (FIFO 1) in eine Verarbeitungseinheit (402 bis 406) geladen, dort in mindestens einem nachfolgenden Takt verarbeitet und anschließend in einem weiteren Takt über eine von der ersten Datenleitung (410) getrennten, zweiten Leitung (414) in einen zweiten Speicher (FIFO 2) geladen werden.

16. Schaltungsanordnung (400) nach Anspruch 14 oder 15, **dadurch gekennzeichnet, daß** zumindest die Verarbeitungseinheit (402 bis 406), insbesondere auch die beiden Speicher (FIFO1, FIFO2), auf einem anwenderspezifischen Schaltkreis (ASIC) angeordet sind.

17. Schaltungsanordnung nach einem der Ansprüche 14 bis 16, wobei ein erster Speicher (FIFO 1) über eine erste Datenleitung (410) mit einer Steuereinheit (402) verbunden ist und die Steuereinheit (402) über eine von der ersten getrennten, zweiten Datenleitung (414) mit einem zweiten Speicher (FIFO 2).

18. Schaltungsanordnung nach einem der Ansprüche 14 bis 17, **dadurch gekennzeichnet, daß** sie Mittel zum Ausführen des Verfahrens nach einem der Ansprüche 1 bis 13 enthält.

19. Drucker mit einer Schaltungsanordnung (400) zum Bearbeiten von Bilddaten nach einem der Ansprüche 14 bis 18.

20. Verfahren zum Skalieren von Bilddaten von einem Quellbildraster in ein Zielbildraster, bei dem ein Skalierfaktor (ZF, SF) durch das Verhältnis zwischen Zielbildraster und Quellbildraster vorgegeben ist, insbesondere in einem Drucker, wobei
a) die Quellbilddaten zu aufeinanderfolgenden Quellbildelementen einer Zeile oder Spalte des Quellbildes (250; 260) nacheinander verarbeitet werden,
b) eine Skaliervariable (ZV, SV), ausgehend von einem Startwert, vorgegeben wird, und zyklisch die Skaliervariable (ZV, SV) mit einem Vergleichswert nach einem Vergleichskriterium verglichen wird und in Abhängigkeit vom Vergleichsergebnis entschieden wird, ob ein Quellbilddatum als Zielbilddatum übernommen wird,
c) der Startwert und das Vergleichskriterium derart festgelegt sind, daß das erste Quellbilddatum der Zeile oder Spalte als Zielbilddatum übernommen wird und wobei
d) die Verarbeitung in einem Pipeline-Prozeß derart erfolgt, daß die Bilddaten in einem Verarbeitungstakt über eine erste Datenleitung (410) zeilen- oder spaltenweise von einem ersten Speicher (FIFO 1) in eine Verarbeitungseinheit (402 bis 406) geladen, dort in mindestens einem nachfolgenden Takt verarbeitet und anschließend in einem weiteren Takt über eine von der ersten Datenleitung (410) getrennten, zweiten Leitung (414) in einen zweiten Speicher (FIFO 2) geladen werden.

## Claims

1. Method for processing image data,
wherein a source image (250; 260) to be processed contains source picture elements arranged matrix-like, a respective source image datum being allocated to these and determining the presentation of the respective source picture element,
a target image (252; 262) arising in the further-processing of the source image data contains target picture elements arranged matrix-like to which a respective target image datum is allocated that determines the presentation of the respective target picture element,
a scaling factor (ZF, SF) is prescribed that determines the ratio of the number of target picture elements per line or column of the target image (252; 262) to the number of source picture elements per line or column of the source image (250; 260),
the source image data for successive source picture elements of a line or column of the source image (250; 260) are successively processed,
wherein a scaling variable (ZV, SV) is prescribed, proceeding from a start value, and, cyclically,
a) the scaling variable (ZV, SV) is compared to a comparison value, and
b) a decision is made dependent on the comparison result as to whether
b1) a source image datum is taken as target image datum and a constant value, particularly the value one, is added to the scaling variable, or
b2) the scaling factor (SF, ZF) is subtracted from the scaling variable (SV, ZV),
the start value and the comparison criterion being defined such that the first source image datum is taken as target image datum, and
wherein the processing ensues in a pipeline process such that the image data are loaded into a processing unit (402 to 406) line-by-line or column-by-column from a first memory (FIFO 1) in a processing clock via a first data line (410), are processed in said processing unit in at least one following clock and are subsequently loaded in a further clock via a second line (414) separate from the first data line (410), into a second memory (FIFO 2).

2. Method for processing image data, particularly in a printer,
wherein a source image (250; 260) to be processed contains source picture elements arranged matrix-like, a respective source image datum being allocated to these and determining the presentation of the respective source picture element,
a target image (252; 262) arising in the further-processing of the source image data contains target picture elements arranged matrix-like to which a respective target image datum is allocated that determines the presentation of the respective target picture element,
a scaling factor (ZF, SF) is prescribed that determines the ratio of the number of target picture elements per line or column of the target image (252; 262) to the number of source picture elements per line or column of the source image (250; 260),
the source image data for successive source picture elements of a line or column of the source image (250; 260) are successively processed,
wherein a scaling variable (ZV, SV) is prescribed, proceeding from a start value, and, cyclically,
a) the scaling variable (ZV, SV) is compared to a comparison value, and
b) a decision is made dependent on the comparison result as to whether
b1) a source image datum is taken as target image datum and a constant value, particularly the value one, is subtracted from the scaling variable, or
b2) the scaling factor (SF, ZF) is added to the scaling variable (SV, ZV),
the start value and the comparison criterion being defined such that the first source image datum is taken as target image datum, and
wherein the processing ensues in a pipeline process such that the image data are loaded into a processing unit (402 to 406) line-by-line or column-by-column from a first memory (FIFO 1) in a processing clock via a first data line (410), are processed in said processing unit in at least one following clock and are subsequently loaded in a further clock via a second line (414) separate from the first data line (410), into a second memory (FIFO 2).

3. Method according to claim 1 or 2, **characterized in that** at least the processing unit (402 to 406), particularly the two memories (FIFO 1, FIFO 2) as well, are contained in an application-specific, integrated circuit (ASIC).

4. Method for processing image data, particularly in a printer,
wherein a source image (250; 260) to be processed contains source picture elements arranged matrix-like, a respective source image datum being allocated to these and determining the presentation of the respective source picture element,
a target image (252; 262) arising in the further-processing of the source image data contains target picture elements arranged matrix-like to which a respective target image datum is allocated that determines the presentation of the respective target picture element,
a scaling factor (ZF, SF) is prescribed that determines the ratio of the number of target picture elements per line or column of the target image (252; 262) to the number of source picture elements per line or column of the source image (250; 260),
the scaling factor (ZF, SF) is employed as start value for a scaling variable (ZV, SV),
the source image data for successive source picture elements of a line or column of the source image (250; 260) are successively processed,
the following steps being cyclically implemented:
a) when the momentary value of the scaling variable (ZV, SV) is greater than zero, the source image datum processed at the moment is copied and employed as target image datum, further the momentary value of the scaling variable (ZV, SV) is diminished by the numerical value "1" (steps 204, 206),
b) when the momentary value of the scaling variable (ZV) is not greater than zero, the next source image datum is employed instead of the source image datum processed at the moment, further, the value of the line factor (ZF) is added to the momentary value of the scaling variables (ZV, SV) (steps 210, 212),
the successively generated target image data belonging to successive target picture elements of a line or column of the target image (252; 262), and
wherein the processing ensues in a pipeline process such that the image data are loaded into a processing unit (402 to 406) line-by-line or column-by-column from a first memory (FIFO 1) in a processing clock via a first data-line (410), are processed in said processing unit in at least one following clock and are subsequently loaded in a further clock via a second line (414) separate from the first data line (410), into a second memory (FIFO 2).

5. Method according to claim 4, **characterized in that** the method is successively implemented both for image lines as well as for image columns, a line factor (ZF) being prescribed as scaling factor for processing line data and a column factor (SF) being prescribed as scaling factor for processing column data.

6. Method according to claim 4 or 5, **characterized in that** the target image data in step A are only generated according to the line processing method when no target image data have been generated according to the predetermined line processing method for the source image data processed at the moment,
and **in that**, otherwise, the target image data already generated according to the prescribed line processing method are employed.

7. Method according to one of the claims 5 or 6, **characterized in that** a line factor (ZF) is prescribed that determines the ratio of the number of target picture elements per line of the target image (252; 262) to the number of source picture elements per line of the source image (250; 260),
the fine factor (ZF) is employed as start value for a line variable (ZV),
the source image data for successive source picture elements of at least one line of the source image (250; 260) are successively processed,
the following steps are cyclically implemented in the execution of the line processing method:
a) when the momentary value of the line variable (ZV) is greater than zero, the source image datum processed at the moment is copied and employed as target image datum, further the momentary value of the line variable (ZV) is reduced by the numerical value "1" (steps 204, 206),
b) when the momentary value of the line variable (ZV) is not greater than zero, the next source image datum is employed instead of the source image datum processed at the moment, further, the value of the line factor (ZF) is added to the momentary value of the line variable (ZV) (steps 210, 212).

8. Method according to one of the preceding claims, **characterized in that** the value of the line variable (ZV) and/or the column variable (SV) is separated into a pre-decimal-point value and a post-decimal-point value.

9. Method according to claim 8, **characterized in that** the pre-decimal-point value is a counter value in a counter.

10. Method according to claim 9, **characterized in that** the counter value is decremented from a predetermined start value, and **in that** the start value is the whole-numbered pre-decimal-point value of the line factor (ZF) or of the column factor (SF).

11. Method according to claim 9 or 10, **characterized in that** the counter contains basic digital gates.

12. Method according to one of the claims 8 to 11, **characterized in that** the post-decimal-point value is calculated in an adder for whole-numbered addition,
and **in that** the adder preferably contains basic digital gates.

13. Method according to one of the preceding claims, wherein, given a scaling factor (SF, ZF) that is greater than one, the target image data of a plurality of groups of target image data are generated from the source image data of a group of source image data processed at the moment, in that only one group of target image data is generated from the group of source image data, this is stored and is subsequently copied until the next group of source image data is processed in a clock-pulse controlled way.

14. Circuit arrangement (400) for processing image data,
comprising an input unit fashioned as first memory (FIFO 1) that receives source image data for source picture elements of a source image (250; 260) in which the source picture elements are arranged matrix-like, and
a processing unit (402 to 406) that further-processes the source image data into target image data according to a predetermined line factor (ZF),
wherein the processing ensues in a pipeline process such that the image data are loaded into the processing unit (402 to 406) line-by-line or column-by-column from a first memory (FIFO 1) in a processing clock via a first data line (410), are processed in said processing unit in at least one following clock and are subsequently loaded in a further clock via a second line (414) separate from the first data line (410), into a second memory (FIFO 2) for the output of the successively generated image data,
the line factor (ZF) being employed as start value for a line variable (ZV),
the source image data for successive source image data of at least one line of the source image (250; 260) being successively processed,
and the following steps being cyclically implemented:
a) when the momentary value of the line variable (ZV) is greater than zero, the source image datum processed at the moment is copied and employed as target image datum, further the momentary value of the line variable (ZV) is reduced by the numerical value "1" (steps 204, 206),
b) when the momentary value of the line variable (ZV) is not greater than zero, the next source image datum is employed instead of the source image datum processed at the moment, further the value of the line factor (ZF) is added to the momentary value of the line variable (ZV) (steps 210, 212).

15. Circuit arrangement (400) for processing image data,
comprising an input unit (FIFO 1) that receives source image data for source picture elements of a source image (250; 260) in which the source picture elements are arranged matrix-like,
a processing unit (402 to 406) that further-processes the source image data into target image data according to a predetermined column factor (SF),
the column factor (SF) being employed as start value for a column variable (SV),
the source image data for successive lines of the source image (250; 260) being successively processed,
the following steps being cyclically implemented:
A) when the momentary value of the column variable (SV) is greater than zero, target image data are generated from the source image data processed at the moment according to a predetermined line processing method, further the momentary value of the column variable (SV) is reduced by the numerical value "1" (steps 108, 110),
B) when the momentary value of the column variable (SV) is not greater than zero, the source image data of the next line are employed instead of the source image data processed at the moment, further the value of the column factor (SF) is added to the momentary value of the column variable (SV) (steps 114, 116),
and having an output unit (FIFO 2) for outputting the successively generated target image data,
the image data being loaded into a processing unit (402 to 406) line-by-line or column-by-column from a first memory (FIFO 1) in a processing clock via a first data line (410), are processed in said processing unit in at least one following clock and are subsequently loaded in a further clock via a second line (414) separate from the first data line (410) into a second memory (FIFO 2).

16. Circuit arrangement (400) according to claim 14 or 15, **characterized in that** at least the processing unit (402 to 406), particularly the two memories (FIFO 1, FIFO2) as well, are arranged on an application-specific, integrated circuit (ASIC).

17. Circuit arrangement according to one of the claims 14 to 16, a first memory (FIFO 1) being connected via a first data line (410) to a control unit (402), and the control unit (402) being connected to a second memory (FIFO 2) via a second data line (414) separate from the first.

18. Circuit arrangement according to one of the claims 14 to 17, **characterized in that** it contains means for executing the method according to one of the claims 1 to 13.

19. Printer having a circuit arrangement (400) for processing image data according to one of the claims 14 to 18.

20. Method for scaling image data from a source image raster into a target image raster, wherein a scaling factor (ZF, SF) is prescribed by the ratio between target image raster and source image raster, particularly in a printer, wherein
a) the source image data for successive source picture elements of a line or column of the source image (250; 260) are successively processed,
b) a scaling variable (ZV, SV) is prescribed proceeding from a start value and, cyclically, the scaling variable (ZV, SV) is compared to a comparison value according to a comparison criterion and a decision is made dependent on the comparison result as to whether a source image datum is taken as target image datum,
c) the start value and the comparison criterion are determined such that the first source image datum of the line or column is taken as target image datum, and wherein
d) the processing ensues in a pipeline process such that the image data are loaded into a processing unit (402 to 406) line-by-line or column-by-column from a first memory (FIFO 1) in a processing clock via a first data line (410), are processed in said processing unit in at least one following clock and are subsequently loaded in a further clock via a second line (414) separate from the first data line (410) into a second memory (FIFO 2).

## Revendications

1. Procédé pour traiter des données d'image, dans lequel
une image source (250 ; 260) à traiter comporte des éléments d'image source agencés sous forme matricielle, à chacun desquels est associée une donnée d'image source qui détermine la représentation de l'élément d'image source correspondante,
une image cible (252 ; 262) apparaissant lors du traitement ultérieur des données d'image source comporte des éléments d'image cible agencés sous forme matricielle, à chacun desquels est associée une donnée d'image cible qui détermine la représentation de l'élément d'image cible correspondante,
un facteur de cadrage (ZF, SF) est prédéterminé, qui détermine le rapport du nombre d'éléments d'image cible par ligne ou par colonne de l'image cible (252 ; 262) sur le nombre d'éléments d'image source par ligne ou par colonne de l'image source (250 ; 260),
les données d'image source associées à des éléments d'image source successifs d'une ligne ou d'une colonne de l'image source (250 ; 260) sont traitées les unes après les autres ;
procédé selon lequel
une variable de cadrage (ZV, SV) est prédéterminée à partir d'une valeur de départ et de façon cyclique
a) la variable de cadrage (ZV, SV) est comparée à une valeur de comparaison ,et
b) en fonction du résultat de la comparaison, il est décidé si
b1) une donnée d'image source est prise comme donnée d'image cible, et une valeur constante, en particulier la valeur un, est ajoutée à la variable de cadrage, ou
b2) le facteur de cadrage (SF, ZF) est soustrait de la variable de cadrage (SV, ZV),
la valeur de départ et le critère de comparaison sont déterminés de telle façon que la première donnée d'image source est prise comme donnée d'image cible, et
le traitement s'effectue dans un processus pipeline de manière à charger, dans un pas de traitement, les données d'image d'une première mémoire (FIFO 1) dans une unité de traitement (402 à 406) par une première ligne de données (410) en les agençant par lignes ou par colonnes, à les traiter dans cette unité de traitement dans au moins un pas suivant, puis à les charger dans un autre pas dans une deuxième mémoire (FIFO 2) par une deuxième ligne (414) distincte de la première ligne de données (410).

2. Procédé de traitement de données d'image, en particulier dans un appareil d'impression, dans lequel
une image source (250 ; 260) à traiter comporte des éléments d'image source agencés sous forme matricielle, à chacun desquels est associée une donnée d'image source qui détermine la représentation de l'élément d'image source correspondante,
une image cible (252 ; 262) apparaissant lors du traitement ultérieur des données d'image source comporte des éléments d'image cible agencés sous forme matricielle, à chacun desquels est associée une donnée d'image cible qui détermine la représentation de l'élément d'image cible,
un facteur de cadrage (ZF, SF) est prédéterminé, qui détermine le rapport du nombre d'éléments d'image cible par ligne ou par colonne de l'image cible (252 ; 262) sur le nombre d'éléments d'image source par ligne ou par colonne de l'image source (250 ; 260),
les données d'image source associées à des éléments d'image source successifs d'une ligne ou d'une colonne de l'image source (250 ; 260) sont traitées les unes après les autres,
procédé selon lequel
une variable de cadrage (ZV, SV) est prédéterminée à partir d'une valeur de départ et de façon cyclique
a) la variable de cadrage (ZV, SV) est comparée à une valeur de comparaison, et
b) en fonction du résultat de la comparaison, il est décidé si
b1) une donnée d'image source est prise comme donnée d'image cible, et une valeur constante, en particulier la valeur un, est soustraite de la variable de cadrage, ou
b2) le facteur de cadrage (SF, ZF) est ajouté à la variable de cadrage (SV, ZV),
la valeur de départ et le critère de comparaison sont déterminés de telle façon que la première donnée d'image source est prise comme donnée d'image cible, et
le traitement s'effectue dans un processus pipeline de manière à charger, dans un pas de traitement, les données d'image d'une première mémoire (FIFO 1) dans une unité de traitement (402 à 406) par une première ligne de données (410) en les agençant par lignes ou par colonnes, à les traiter dans cette unité de traitement dans au moins un pas suivant, puis à les charger dans un autre pas dans une deuxième mémoire (FIFO 2) par une deuxième ligne (414) distincte de la première ligne de données (410) .

3. Procédé selon la revendication 1 ou 2, **caractérisé en ce qu'**au moins l'unité de traitement (402 à 406), en particulier également les deux mémoires (FIFO 1, FIFO 2), est contenue dans un circuit intégré (ASIC) propre à l'utilisateur.

4. Procédé de traitement de données d'image, en particulier dans un appareil d'impression, dans lequel une image source (250 ; 260) à traiter comporte des éléments d'image source agencés sous forme matricielle, à chacun desquels est associée une donnée d'image source qui détermine la représentation de l'élément d'image source correspondante,
une image cible (252 ; 262) apparaissant lors du traitement ultérieur des données d'image source comporte des éléments d'image cible agencés sous forme matricielle, à chacun desquels est associée une donnée d'image cible qui détermine la représentation de l'élément d'image cible,
un facteur de cadrage (ZF, SF) est prédéterminé, qui détermine le rapport du nombre d'éléments d'image cible par ligne ou par colonne de l'image cible (252 ; 262) sur le nombre d'éléments d'image source par ligne ou par colonne de l'image source (250 ; 260),
le facteur de cadrage (ZF, SF) est utilisé comme valeur de départ pour une variable de cadrage (ZV, SV),
les données d'image source associées à des éléments d'image source successifs d'une ligne ou d'une colonne de l'image source (250 ; 260) sont traitées les unes après les autres,
procédé selon lequel les étapes suivantes sont réalisées de façon cyclique :
a) dans le cas où la valeur instantanée de la variable de cadrage (ZV, SV) est supérieure à zéro, la donnée d'image source traitée à cet instant est copiée et est utilisée comme donnée d'image cible, la valeur instantanée de la variable de cadrage (ZV, SV) est en outre réduite de la valeur numérique « 1 » (étapes 204, 206),
b) dans le cas où la valeur instantanée de la variable de cadrage (ZV) n'est pas supérieure à zéro, la donnée d'image source suivante est utilisée à la place de la donnée d'image source traitée à cet instant, la valeur du facteur de cadrage (ZF) est ajoutée à la valeur instantanée de la variable de cadrage (ZV, SV) (étapes 210, 212),
les données d'image cible générées les unes après les autres appartenant aux éléments d'image cible successifs d'une ligne ou d'une colonne de l'image cible (252 ; 262), et
le traitement s'effectuant dans un processus pipeline de manière à charger, dans un pas de traitement, les données d'image d'une première mémoire (FIFO 1) dans une unité de traitement (402 à 406) par une première ligne de données (410) en les agençant par lignes ou par colonnes, à les traiter dans cette unité de traitement dans au moins un pas suivant, puis à les charger à un autre pas dans une deuxième mémoire (FIFO 2) par une deuxième ligne (414) distincte de la première ligne de donnée (410).

5. Procédé selon la revendication 4, **caractérisé en ce que** le procédé est mis en oeuvre successivement aussi bien pour les lignes d'image que pour les colonnes d'image, un facteur de ligne (ZF) étant prédéterminé comme facteur de cadrage en vue de traiter des données de lignes, et un facteur de colonne (SF) étant prédéterminé comme facteur de cadrage en vue de traiter des données de colonnes.

6. Procédé selon la revendication 4 ou 5, **caractérisé en ce que** les données d'image cible ne sont générées à l'étape A qu'après le procédé de traitement des lignes lorsque aucune donnée d'image cible, associée aux données d'image source traitées à cet instant, n'a encore été générée après le procédé de traitement des lignes prédéterminé,
et **en ce qu'**il est utilisé par ailleurs les données d'image cible générées après le procédé de traitement des lignes prédéterminé.

7. Procédé selon l'une des revendications 5 ou 6, **caractérisé en ce qu'**un facteur de ligne (ZF) est prédéterminé, qui détermine le rapport du nombre d'éléments d'image cible par ligne de l'image cible (252 ; 262) sur le nombre d'éléments d'image source par ligne de l'élément d'image (250 ; 260),
le facteur de ligne (ZF) est utilisé comme valeur de départ pour une variable de ligne (ZV),
les données d'image source associées à des éléments d'image source successifs d'au moins une ligne de l'image source (250 ; 260) sont traitées les unes après les autres,
procédé selon lequel, lors de la mise en oeuvre du procédé de traitement des lignes, les étapes suivantes sont effectuées de façon cyclique :
a) dans le cas où la valeur instantanée de la variable de ligne (ZV) est supérieure à zéro, la donnée d'image source traitée à cet instant est copiée et est utilisée comme donnée d'image cible, la valeur instantanée de la variable de ligne (ZV) est en outre réduite de la valeur numérique « 1 » (étapes 204, 206),
b) dans le cas où la valeur instantanée de la variable de ligne (ZV) n'est pas supérieure à zéro, la donnée d'image source est utilisée à la place de la donnée d'image source traitée à cet instant, la valeur du facteur de ligne (ZF) est ajoutée à la valeur instantanée de la variable de ligne (ZV) (étapes 210, 212),

8. Procédé selon l'une des revendications précédentes, **caractérisé en ce que** la valeur de la variable de ligne (ZV) et/ou de la variable de colonne (SV) est scindée en une partie entière et une partie décimale.

9. Procédé selon la revendication 8, **caractérisé en ce que** la partie entière est une valeur de compteur dans un compteur.

10. Procédé selon la revendication 9, **caractérisé en ce que** la valeur de compteur est décrémentée depuis une valeur de départ prédéterminée, et **en ce que** la valeur de départ est la valeur de la partie entière du facteur de ligne (ZF) ou du facteur de colonne (SF).

11. Procédé selon la revendication 9 ou 10, **caractérisé en ce que** le compteur contient des circuits logiques de base.

12. Procédé selon l'une des revendications 8 à 11, **caractérisé en ce que** la partie décimale est calculée dans un additionneur pour addition de nombres entiers,
et **en ce que** l'additionneur comporte de préférence des circuits logiques de base.

13. Procédé selon l'une des revendications précédentes, dans lequel avec un facteur de cadrage (SF, ZF) qui est supérieur à un, les données d'image cible de plusieurs groupes de données d'image cible sont générées à partir des données d'image source d'un groupe traité à cet instant de données d'image source, en ne générant à partir du groupe de données d'image source qu'un groupe de données d'image cible, en mémorisant celles-ci puis en les copiant jusqu'à ce que le groupe suivant de données d'image source soit traité de façon synchronisée.

14. Ensemble de circuit (400) pour traiter des données d'image, comportant
une unité d'entrée conformée en première mémoire (FIFO 1) qui reçoit des données d'image source associées à des éléments d'image source d'une image source (250 ; 260) dans laquelle les éléments d'image source sont agencés de façon matricielle, et
une unité de traitement (402 à 406) qui effectue ensuite un traitement des données d'image source associées aux données d'image cible suivant un facteur de ligne prédéterminé (ZF),
dans lequel le traitement s'effectue dans un processus pipeline de manière à charger, dans un pas de traitement, les données d'image d'une première mémoire (FIFO 1) dans l'unité de traitement (402 à 406) par une première ligne de données (410) en les agençant par lignes ou par colonnes, à les traiter dans cette unité de traitement dans au moins un pas suivant, puis à les charger dans un autre pas dans une deuxième mémoire (FIFO 2) par une deuxième ligne (414) distincte de la première ligne de données (410) en vue de délivrer les données d'image générées les unes après les autres,
le facteur de ligne (ZF) est utilisé comme valeur de départ pour une variable de ligne (ZV),
les données d'image source associées à des éléments d'image source successifs d'une ligne ou d'une colonne de l'image source (250 ; 260) sont traitées les unes après les autres,
et les étapes suivantes sont réalisées de façon cyclique :
a) dans le cas où la valeur instantanée de la variable de ligne (ZV) est supérieure à zéro, la donnée d'image source traitée à cet instant est copiée et est utilisée comme donnée d'image cible, la valeur instantanée de la variable de cible (ZV) est en outre réduite de la valeur numérique « 1 » (étapes 204, 206),
b) dans le cas où la valeur instantanée de la variable de ligne (ZV) n'est pas supérieure à zéro, la donnée d'image source suivante est utilisée à la place de la donnée d'image source traitée à cet instant, la valeur du facteur de ligne (ZF) est ajoutée à la valeur instantanée de la variable de ligne (ZV) (étapes 210, 212).

15. Ensemble de circuit (400). pour traiter des données d'image, comportant
une unité d'entrée (FIFO 1) qui reçoit des données d'image source associées à des éléments d'image source d'une image source (250 ; 260) dans laquelle les éléments d'image source sont agencés de façon matricielle, et
une unité de traitement (402 à 406) qui effectue ensuite un traitement des données d'image source associées aux données d'image cible selon un facteur de ligne prédéterminé (SF),
dans lequel le facteur de ligne (SF) est utilisé comme valeur de départ pour une variable de colonne (SV),
les données d'image source associées à des lignes de l'image source (250 ; 260) sont traitées successivement,
les étapes suivantes sont réalisées de façon cyclique :
a) dans le cas où la valeur instantanée de la variable de colonne (SV) est supérieure à zéro, des données d'image cibles sont générées à partir des données d'image source traitées à cet instant après un procédé de traitement de ligne prédéterminé, la valeur instantanée de la variable de colonne (SV) est en outre réduite de la valeur numérique « 1 » (étapes 108, 110),
b) dans le cas où la valeur instantanée de la variable de colonne (SV) n'est pas supérieure à zéro, les données d'image source de la ligne suivante sont utilisées à la place des données d'image source traitées à cet instant, la valeur du facteur de colonne (SF) est ajoutée à la valeur instantanée de la variable de colonne (SV) (étapes 210, 212),
et une unité de sortie (FIFO 2) pour délivrer les données d'image cible se suivant les unes après les autres,
dans lequel le traitement s'effectue dans un processus pipeline de manière à charger, dans un pas de traitement, les données d'image d'une première mémoire (FIFO 1) dans une unité de traitement (402 à 406) par une première ligne de données (410) en les agençant par lignes ou par colonnes, à les traiter dans cette unité de traitement dans au moins un pas suivant, puis à les charger dans un autre pas dans une deuxième mémoire (FIFO 2) par une deuxième ligne (414) distincte de la première ligne de données (410).

16. Ensemble de circuit (400) selon la revendication 14 ou 15, **caractérisé en ce qu'**au moins l'unité de traitement (402 à 406), en particulier également les deux mémoires (FIFO 1, FIFO 2), est agencée sur un circuit (ASIC) propre à un utilisateur.

17. Ensemble de circuit selon l'une des revendications 14 à 16, dans lequel une première mémoire (FIFO 1) est reliée par une première ligne de données (410) à une unité de commande (402), et l'unité de commande (402) est reliée par une deuxième ligne de données (414) distincte de la première à une deuxième mémoire (FIFO 2).

18. Ensemble de circuit selon l'une des revendications 14 à 17, **caractérisé en ce qu'**il comporte des moyens pour mettre en oeuvre le procédé selon l'une des revendications 1 à 13.

19. Appareil d'impression comportant un ensemble de circuit (400) pour traiter des données d'image selon l'une des revendications 14 à 18.

20. Procédé de cadrage de données d'image d'une trame d'image source dans une trame d'image cible, où un facteur de cadrage (ZF, SF) est prédéterminé par le rapport entre la trame d'image cible et la trame d'image source, en particulier dans un appareil d'impression, dans lequel
a) les données d'image source associées aux éléments d'image source successifs d'une ligne ou d'une colonne de l'image source (250 ; 260) sont traitées les unes après les autres,
b) une variable de cadrage (ZV, SV) est prédéterminée à partir d'une valeur de départ, et la variable de cadrage (ZV, SV) est comparée cycliquement à une valeur de comparaison selon un critère de comparaison, et, en fonction du résultat de la comparaison, il est décidé si une donnée d'image source est prise comme donnée d'image cible,
c) la valeur de départ et le critère de comparaison sont déterminés de telle façon que la première donnée d'image source de la ligne ou de la colonne est prise comme donnée d'image cible, et
d) le traitement est effectué dans un processus pipeline de manière à charger, dans un pas de traitement, les données d'image d'une première mémoire (FIFO 1) dans une unité de traitement (402 à 406) par une première ligne de données (410) en les agençant par lignes ou par colonnes, à les traiter dans cette unité de traitement dans au moins un pas suivant, puis à les charger dans un autre pas dans une deuxième mémoire (FIFO 2) par une deuxième ligne (414) distincte de la première ligne de donnée (410).
